# EUROPEAN PATENT APPLICATION

(11) **EP 4 633 272 A1**
(43) Date of publication of application: **15.10.2025**
(21) Application number: 22968834.6
(22) Date of filing: 20.12.2022
(51) Int. Cl.: H04W 74/08

(54) **WIRELESS COMMUNICATION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Aldridge, Henry Alexander
(86) International application number: PCT/CN2022/140244
(87) International publication number: WO 2024/130531

(57) **Abstract**

A wireless communication method and a terminal device are provided. The method includes the following. A terminal device determines to transmit first sidelink (SL) data on a shared spectrum based on a first channel access type and/or a second channel access type, where the first channel access type is different from the second channel access type, and the first channel access type and the second channel access type are channel access procedures in which the shared spectrum is listened before transmitting the first SL data on the shared spectrum, which helps to improve the probability of transmission of SL data on the shared spectrum by the terminal device.

## Description

### TECHNICAL FIELD

The disclosure relates to the field of communication technology, and more particularly, to a wireless communication method and a terminal device.

### BACKGROUND

On a shared spectrum, two channel access types are supported, namely a first channel access type and a second channel access type, where the two channel access types are channel access procedures in which the shared spectrum is listened before transmitting first sidelink (SL) data to-be-transmitted on the shared spectrum. In some cases, a terminal device can access the shared spectrum in the first channel access type, or can access the shared spectrum in the second channel access type. At present, the behaviour of the terminal device in the above cases is not yet specified in a protocol, and as a result, the terminal device is unable to transmit SL data on the shared spectrum.

### SUMMARY

The disclosure provides a wireless communication method and a terminal device. Various aspects of the disclosure are introduced below.

In a first aspect, a wireless communication method is provided. The method includes the following. A terminal device determines to transmit first sidelink (SL) data on a shared spectrum based on a first channel access type and/or a second channel access type, where the first channel access type is different from the second channel access type, and the first channel access type and the second channel access type are channel access procedures in which the shared spectrum is listened before transmitting the first SL data on the shared spectrum.

In a second aspect, a wireless communication method is provided. The method includes the following. A terminal device determines a transmission mode for SL data to-be-transmitted on a shared spectrum based on a first channel access priority class (CAPC) and a second CAPC, where the first CAPC is associated with a first channel access procedure performed on the shared spectrum, the second CAPC is associated with the SL data, and the first channel access procedure is a channel access procedure in which the shared spectrum is listened before transmitting the SL data on the shared spectrum.

In a third aspect, a terminal device is provided. The terminal device includes a processing unit. The processing unit is configured to determine to transmit first SL data on a shared spectrum based on a first channel access type and/or a second channel access type, where the first channel access type is different from the second channel access type, and the first channel access type and the second channel access type are channel access procedures in which the shared spectrum is listened before transmitting the first SL data on the shared spectrum.

In a fourth aspect, a terminal device is provided. The terminal device includes a processing unit. The processing unit is configured to determine a transmission mode for SL data to-be-transmitted on a shared spectrum based on a first CAPC and a second CAPC, where the first CAPC is associated with a first channel access procedure performed on the shared spectrum, the second CAPC is associated with the SL data, and the first channel access procedure is a channel access procedure in which the shared spectrum is listened before transmitting the SL data on the shared spectrum.

In a fifth aspect, a terminal device is provided. The terminal device includes a processor, a memory, and a communication interface. The memory is configured to store one or more computer programs. The processor is configured to invoke the computer programs from the memory, to cause the terminal device to perform some or all of the steps in the methods in various aspects.

In a sixth aspect, a communication system is provided in embodiments of the disclosure. The system includes the foregoing terminal device. In another possible design, the system can further include another device for interacting with the terminal device in the solutions provided in embodiments of the disclosure.

In a seventh aspect, a computer-readable storage medium is provided in embodiments of the disclosure. The computer-readable storage medium is configured to store computer programs which are operable with a communication device (for example, a terminal device or a network device) to perform some or all of the steps in the methods in the foregoing aspects.

In an eighth aspect, a computer program product is provided in embodiments of the disclosure. The computer program product includes a non-transitory computer-readable storage medium configured to store computer programs which are operable with a communication device (for example, a terminal device or a network device) to perform some or all of the steps in the methods in the foregoing aspects. In some implementations, the computer program product can be a software installation package.

In a ninth aspect, a chip is provided in embodiments of the disclosure. The chip includes a memory and a processor. The processor can invoke and execute computer programs from the memory, to implement some or all of the steps described in the methods in the foregoing aspects.

In the embodiments of the disclosure, a terminal device can determine to transmit the first SL data on the shared spectrum based on the first channel access type and/or the second channel access type, which helps to improve the probability of transmission of SL data on the shared spectrum by the terminal device.

### BRIEF DESCRIPTION OF THE DRAWINGS

FIG. 1 is an exemplary system architectural diagram of a wireless communication system to which embodiments of the disclosure can be applied.
FIG. 2 is an exemplary diagram illustrating a scenario of in-coverage sidelink (SL) communication.
FIG. 3 is an exemplary diagram illustrating a scenario of partial-coverage SL communication.
FIG. 4 is an exemplary diagram illustrating a scenario of out-of-coverage SL communication.
FIG. 5 is a diagram illustrating a scenario of central control node-based SL communication.
FIG. 6 is an exemplary diagram illustrating broadcast-based SL communication.
FIG. 7 is an exemplary diagram illustrating unicast-based SL communication.
FIG. 8 is an exemplary diagram illustrating groupcast-based SL communication.
FIG. 9 is a schematic diagram illustrating a physical-layer structure for SL communication.
FIG. 10 is a schematic diagram illustrating resource reservation in SL communication.
FIG. 11 is a schematic diagram illustrating a sensing-based resource selection method in an SL communication system.
FIG. 12 is a schematic flowchart of a wireless communication method according to an embodiment of the disclosure.
FIG. 13 is a schematic flowchart of a wireless communication method according to another embodiment of the disclosure.
FIG. 14 is a schematic flowchart of a wireless communication method according to an embodiment of the disclosure.
FIG. 15 is a schematic flowchart of a wireless communication method according to another embodiment of the disclosure.
FIG. 16 is a schematic flowchart of a terminal device according to an embodiment of the disclosure.
FIG. 17 is a schematic flowchart of a terminal device according to another embodiment of the disclosure.
FIG. 18 is a schematic structural diagram of a communication apparatus according to an embodiment of the disclosure.

### DETAILED DESCRIPTION

The following describes the technical solutions of the disclosure with reference to the accompanying drawings.

### Communication system architecture

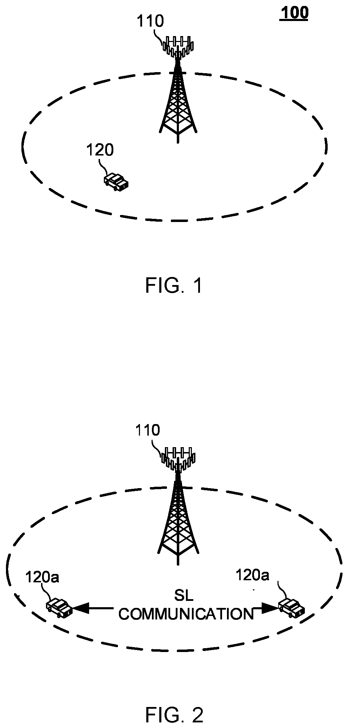

FIG. 1 is an exemplary system architectural diagram of a wireless communication system 100 to which embodiments of the disclosure can be applied. The wireless communication system 100 can include a network device 110 and a terminal device 120. The network device 110 can be a device for communicating with the terminal device 120. The network device 110 can provide communication coverage for a particular geographic area, and can communicate with the terminal device 120 located in the coverage area.

FIG. 1 exemplarily illustrates one network device and one terminal device. Optionally, the wireless communication system 100 can include one or more network devices 110 and/or one or more terminal devices 120. For one network device 110, the one or more terminal devices 120 can all be located in network coverage of the network device 110, or can all be located out of the network coverage of the network device 110, or some of the terminal devices can be located in the coverage of the network device 110 and the other terminal devices are located out of the network coverage of the network device 110, which is not limited in embodiments of the disclosure.

Optionally, the wireless communication system 100 can further include other network entities such as a network controller and a mobility management entity, which is not limited in embodiments of the disclosure.

It should be understood that, the technical solutions of embodiments of the disclosure can be applied to various communication systems, such as a 5^{th}-generation (5G) system or a new radio (NR), a long-term evolution (LTE) system, an LTE frequency division duplex (FDD) system, and an LTE time division duplex (TDD) system. The technical solutions provided in the disclosure can also be applied to a future communication system, such as a 6^{th}-generation mobile communication system, and a satellite communication system.

The terminal device in embodiments of the disclosure can also be referred to as a user equipment (UE), an access terminal, a subscriber unit, a subscriber station, a mobile station (MS), a mobile terminal (MT), a remote station, a remote terminal device, a mobile device, a user terminal, a wireless communication device, a user agent, or a user apparatus. The terminal device in embodiments of the disclosure can refer to a device providing voice and/or data connectivity for a user, and can be used for connecting a human, an object, and a machine, for example, various devices having wireless connection functions such as a handheld device, a in-vehicle device, and the like. The terminal device in embodiments of the disclosure can be a mobile phone, a tablet computer (pad), a notebook computer, a palmtop computer, a mobile internet device (MID), a wearable device, a vehicle, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. For example, the terminal device can act as a scheduling entity for providing SL signals between terminal devices in vehicle-to-everything (V2X) or device-to-device (D2D) communication, etc. For example, a cellular radio telephone and an automobile communicate with each other by using SL signals. A cellular radio telephone and a smart household appliance communicate with each other without relaying communication signals via a base station. Optionally, the terminal device can be used to act as a base station.

The network device in embodiments of the disclosure can be a device for communicating with the terminal device. The network device can also be referred to as an access-network device or a radio access network (RAN) device, for example, the network device can be a base station. The network device in embodiments of the disclosure can refer to a RAN node (or device) that enables a terminal device to access a wireless network. The base station can cover various names in a broad sense, or replace the following names, for example, a NodeB or an evolved NodeB (eNB), a next-generation node B (gNB), a relay node, an access point (AP), a transmission and reception point (TRP), a transmission point (TP), a master station (MeNB), a secondary station (SeNB), a multi-standard radio (MSR) node, a home base station, a network controller, an access node, a radio node, and an AP, a transmission node, a transmission and reception node, a baseband unit (BBU), a remote radio unit (RRU), an active antenna unit (AAU), a remote radio head (RRH), a central unit (CU), a distributed unit (DU), a positioning node, and the like. The base station can be a macro base station, a micro base station, a relay node, a donor node, or the like, or a combination thereof. The base station can also refer to a communication module, a modem, or a chip that is configured in the foregoing device or apparatus. The base station can also be a mobile switching center, a device functioning as a base station in D2D, V2X, and machine-to-machine (M2M) communication, a network-side device in a 6G network, a device functioning as a base station in a future communication system, etc. The base station can support networks of the same or different access technologies. There is no limitation on the specific technology and device form applied to the network device in embodiments of the disclosure.

The base station can be fixed or mobile. For example, a helicopter or unmanned aerial vehicle (UAV) can be configured to act as a mobile base station, and one or more cells can move according to the position of the mobile base station. In other examples, the helicopter or UAV can be configured to function as a device for communicating with another base station.

In some deployments, the network device in embodiments of the disclosure can refer to a CU or a DU, or the network device includes a CU and a DU. The gNB can also include an AAU.

The network device and the terminal device can be deployed on land, which includes indoor or outdoor, handheld, wearable, or in-vehicle. The network device and the terminal device can also be deployed on water. The network device and the terminal device can also be deployed on airplanes, balloons, satellites, etc. in the air. In embodiments of the disclosure, there is no limitation on the scenario in which the network device and the terminal device are located.

### Sidelink (SL) communication under different network coverage conditions

SL communication refers to an SL-based communication technology. SL communication can be, for example, device to device (D2D) communication or vehicle to everything (V2X) communication. Communication data in a conventional cellular system is received or transmitted between a terminal device and a network device, while SL communication supports direct transmission of communication data between terminal devices. Compared with conventional cellular communication, direct transmission of communication data between terminal devices can have higher spectrum efficiency and lower transmission delay. For example, an SL communication technology is applied to a V2X system.

With regard to SL communication, SL communication can be classified into in-coverage SL communication, partial-coverage SL communication, and out-of-coverage SL communication according to the network coverage condition of the terminal device.

FIG. 2 is an exemplary diagram illustrating a scenario of in-coverage SL communication. In the scenario illustrated in FIG. 2, two terminal devices 120a are both within the coverage of a network device 110. Therefore, the two terminal devices 120a can both receive configuration signaling (in the disclosure, the "configuration signaling" can also be replaced by "configuration information") from the network device 110, and determine SL configuration according to the configuration signaling from the network device 110. After the terminal devices 120a both complete SL configuration, SL communication can be performed on an SL.

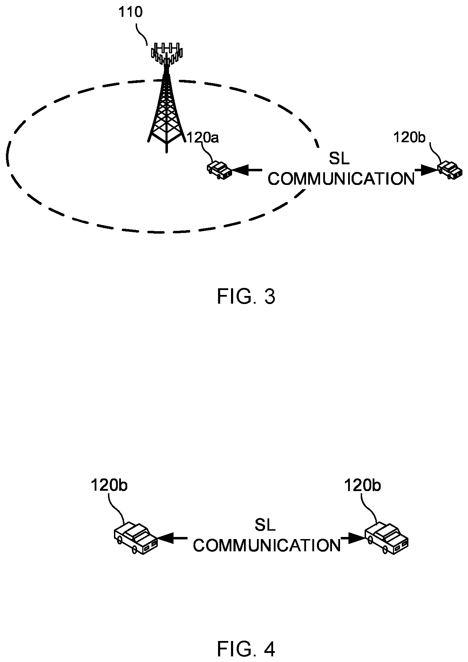

FIG. 3 is an exemplary diagram illustrating a scenario of partial-coverage SL communication. In the scenario illustrated in FIG. 3, a terminal device 120a performs SL communication with a terminal device 120b. The terminal device 120a is located within the coverage of a network device 110, and therefore, the terminal device 120a can receive configuration signaling from the network device 110 and determine SL configuration according to the configuration signaling from the network device 110. The terminal device 120b is located out of network coverage and cannot receive the configuration signaling from the network device 110. In this case, the terminal device 120b can determine the SL configuration according to pre-configuration information and/or information carried on a physical sidelink broadcast channel (PSBCH) transmitted by the terminal device 120a located within network coverage. After the terminal device 120a and the terminal device 120b are both configured with the SL configuration, SL communication can be performed on an SL.

FIG. 4 is an exemplary diagram illustrating a scenario of out-of-coverage SL communication. In the scenario illustrated in FIG. 4, two terminal devices 120b are both located out of network coverage. In this case, the two terminal devices 120b can determine SL configuration according to pre-configuration information. After the two terminal devices 120b both complete SL configuration, SL communication can be performed on an SL.

### Central control node-based SL communication

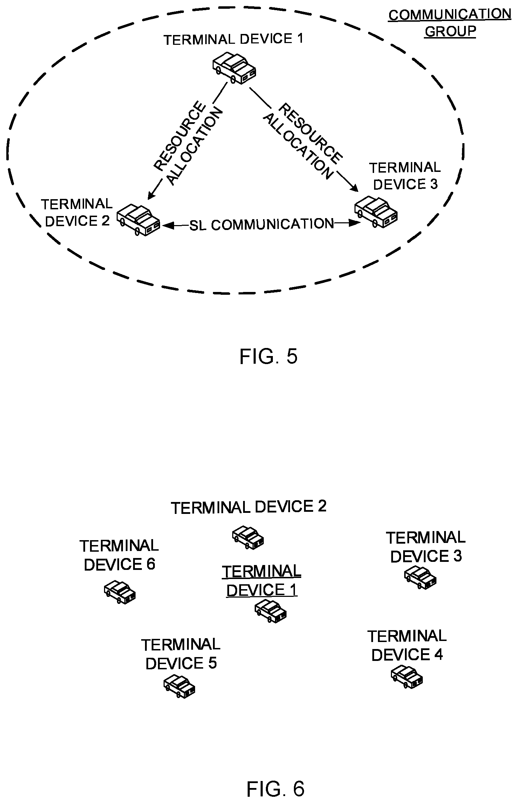

FIG. 5 is an exemplary diagram illustrating a scenario of central control node-based SL communication. In such SL communication scenario, multiple terminal devices can constitute a communication group, and the communication group includes a central control node. The central control node can be a terminal device (such as terminal device 1 in FIG. 5) in the communication group, where such terminal device can also be referred to as cluster header (CH) terminal device. The central control node can be responsible for implementing one or more of the following functions: establishment of communication group, joining and leaving of group members in the communication group, resource coordination within the communication group, allocation of SL transmission resource to another terminal, reception of SL feedback information from other terminals, or resource coordination with another communication group.

### SL communication mode

In some standards or protocols, such as the 3^{rd}-generation partnership project (3GPP), two SL communication modes are defined, namely mode 1 and mode 2.

In mode 1, a resource for the terminal device (the resource in the disclosure can also be referred to as a transmission resource, such as a time-frequency resource) is allocated by the network device. The terminal device can perform data transmission on an SL over the resource allocated by the network device. The network device can allocate to the terminal device a resource for single transmission, or can allocate to the terminal device a resource for semi-static transmission. Mode 1 can be applied to a scenario in which the terminal device is located within coverage of the network device, such as the scenario illustrated in FIG. 2. In the scenario illustrated in FIG. 2, the terminal device 120a is located within network coverage of the network device 110, and therefore, the network device 110 can allocate a resource used for SL transmission to the terminal device 120a.

In mode 2, the terminal device can autonomously select one or more resources from a resource pool (RP). Then the terminal device can perform SL transmission on the resource(s) selected. For example, in the scenario illustrated in FIG. 4, the terminal device 120b is located out of coverage of a cell. Therefore, the terminal device 120b can autonomously select a resource from a pre-configured resource pool to perform SL transmission. Alternatively, in the scenario illustrated in FIG. 2, the terminal device 120a can autonomously select one or more resources from a resource pool configured by the network device 110, so as to perform SL transmission.

### Data transmission mode for SL communication

Some SL communication systems (such as LTE-V2X) support broadcast-based data transmission (hereinafter, "broadcast transmission" for short). For broadcast transmission, a receive (Rx) terminal can be any terminal device around a transmit (Tx) terminal. Taking FIG. 6 as an example, terminal device 1 is a Tx terminal, and an Rx terminal corresponding to the Tx terminal is any terminal device around terminal device 1, for example, terminal device 2 ~ terminal device 6 in FIG. 6.

In addition to broadcast transmission, some communication systems support unicast-based data transmission (hereinafter, "unicast transmission" for short) and/or groupcast-based data transmission (hereinafter, "groupcast transmission" for short). For example, NR-V2X expects to support autonomous driving. Autonomous driving has higher requirements on data exchange between vehicles. For example, data exchange between vehicles requires higher throughput, lower delay, higher reliability, larger coverage, more flexible resource allocation modes, and the like. Therefore, in order to improve data exchange performance between vehicles, unicast transmission and groupcast transmission are introduced in NR-V2X.

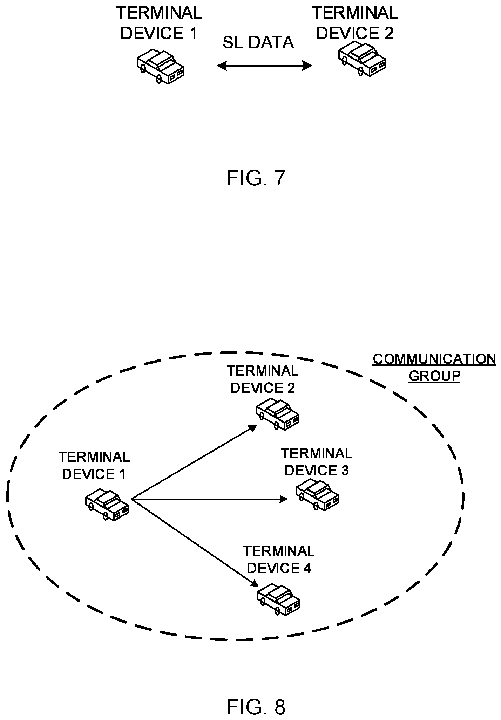

For unicast transmission, the Rx terminal generally includes only one terminal device. Taking FIG. 7 as an example, transmission performed between terminal device 1 and terminal device 2 is unicast transmission. Terminal device 1 can be a Tx terminal, and terminal device 2 can be an Rx terminal. Alternatively, terminal device 1 can be an Rx terminal, and terminal device 2 can be a Tx terminal.

For groupcast transmission, the Rx terminal can be a terminal device in a communication group, or the Rx terminal can be a terminal device within a certain transmission distance. Taking FIG. 8 as an example, terminal device 1, terminal device 2, terminal device 3, and terminal device 4 constitute a communication group. If terminal device 1 performs data transmission, all the other terminals in the group (terminal device 2 ~ terminal device 4) can be Rx terminals.

### Physical-layer structure for SL communication

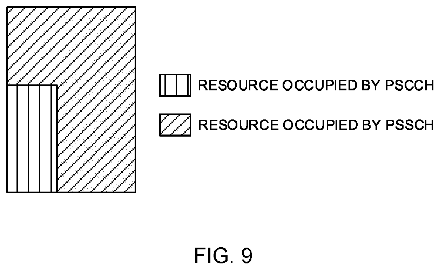

FIG. 9 is a schematic diagram illustrating a physical-layer structure for SL communication. Referring to FIG. 9, a physical sidelink control channel (PSCCH) can be used for carrying first sidelink control information (SCI), and a physical sidelink shared channel (PSSCH) can be used for carrying SL data and second SCI, where the PSCCH and the PSSCH can be multiplexed and transmitted in the same slot.

The first SCI is carried on the PSCCH and mainly includes a resource sensing-related field, and is used for resource exclusion and resource selection after the first SCI is decoded by another terminal. In addition to the SL data, the PSSCH can also carry the second SCI, where the second SCI mainly includes a data demodulation-related field and is used for an Rx terminal to demodulate data carried on a PSSCH associated with the PSCCH.

### Resource reservation for SL communication

As introduced in the foregoing "SL communication mode", in mode 2, the terminal device can autonomously select an SL resource to perform data transmission. Resource reservation can be understood as a prerequisite for supporting the terminal device in resource selection. Resource reservation means that the terminal device can reserve a selected SL resource (for example, a time-frequency resource) by using first SCI carried on a PSCCH.

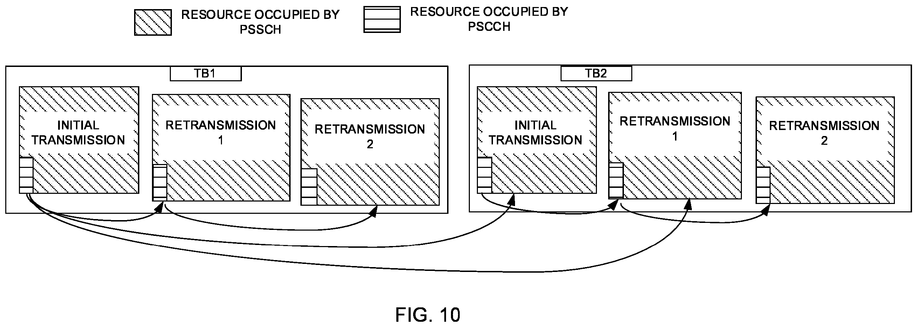

Currently, in an SL communication system, same-transport block (TB) resource reservation and cross-TB resource reservation are both supported, which will be described below with reference to FIG. 10.

Referring to FIG. 10, the terminal device transmits the first SCI, and uses a time resource assignment field and a frequency resource assignment field in the first SCI to indicate N time-frequency resources used for transmission of a current TB (including a time-frequency resource(s) currently used for TB transmission), where *N* ≤ *Nmax* in general, and *Nmax* = 2 or 3 in NR V2X. In addition, the N time-frequency resources indicated can be distributed across *W* slots. In NR V2X, *W* = 32.

Still referring to FIG. 10, during transmission of TB1, the terminal device can transmit the first SCI on a PSCCH while transmitting initial transmission data on a PSSCH, and use the foregoing two fields in the first SCI to indicate a location of a time-frequency resource for initial transmission and a location of a time-frequency resource for retransmission 1 (i. e. N=2 in this case), that is, reserve the time-frequency resource for retransmission 1. In general, the initial transmission and retransmission 1 are distributed across 32 slots in time domain.

Likewise, with reference to FIG. 10, during transmission of TB1, the terminal device can indicate the time-frequency resource for retransmission 1 and a time-frequency resource for retransmission 2 by using the first SCI transmitted on a PSCCH for retransmission 1. The time-frequency resource for retransmission 1 and the time-frequency resource for retransmission 2 can be distributed across 32 slots in time domain.

In addition, during transmission of the first SCI, the terminal device can perform cross-TB resource reservation by using a resource reservation period field in the first SCI.

Still referring to FIG. 10, during transmission of the first SCI that indicates a resource for initial transmission of TB1, the terminal device can use the time resource assignment field and the frequency resource assignment field in the first SCI to indicate a location of a time-frequency resource for initial transmission of TB1 and a location of a time-frequency resource for retransmission of TB1, which are denoted as {(*t1, f1*), (*t2, f2*)}. *t1* and t2 represent a time-domain location of the resource for initial transmission of TB1 and a time-domain location of a resource for retransmission 1 of TB1, and f1 and f2 represent a frequency-domain location of the resource for initial transmission of TB1 and a frequency-domain location of the resource for retransmission 1 of TB1. If the value of the resource reservation period field in the first SCI is 100 milliseconds (ms), the first SCI further indicates time-frequency resources {(*t1*+*100*, *f1*)*,* (*t2*+*100*, *f2*)}*,* where the two resources are used for initial transmission of TB2 and retransmission 1 of TB2.

Likewise, the first SCI transmitted on the resource for retransmission 1 of TB1 can also be used for reserving a time-frequency resource for retransmission 1 of TB2 and a time-frequency resource for retransmission 2 of TB2 by using the resource reservation period field. In NR V2X, possible values of the resource reservation period field are 0, 1~99, 100, 200, 300, 400, 500, 600, 700, 800, 900, and 1000 ms, which is more flexible compared with LTE V2X. However, for each resource pool, only k types of values are configured in general, and the terminal device can determine possible values according to the resource pool used by the terminal device, where k types of values in a resource-pool configuration are denoted as resource reservation period set M, and exemplarily, *k* ≤ 16.

In addition, through network configuration or pre-configuration, the foregoing cross-TB reservation can be activated or deactivated per resource pool. If cross-TB reservation is deactivated, the first SCI does not include the resource reservation period field. In general, before resource reselection is triggered, the value of the resource reservation period field, i. e. the resource reservation period, used by the terminal device remains unchanged. Each time the terminal device transmits the first SCI, the terminal device reserves a resource for a next period by using the "resource reservation period field" in the first SCI, where the resource is used for transmission of another TB, thereby realizing semi-persistent transmission periodically.

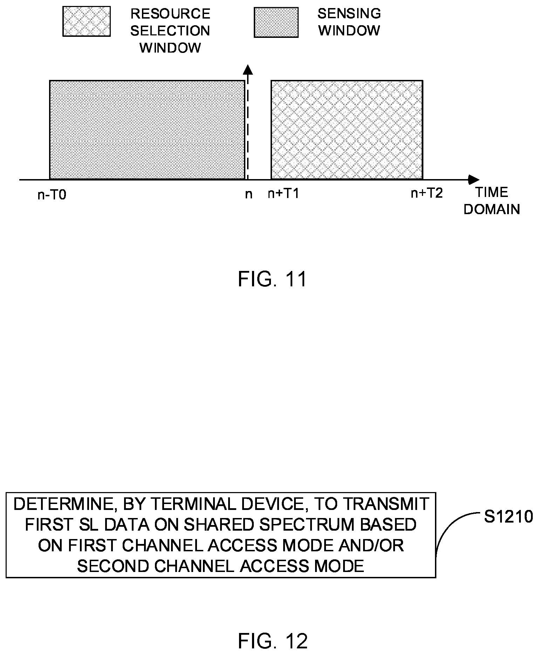

If the terminal device operates in the foregoing mode 2, the terminal device can listen to a PSCCH transmitted by another terminal to obtain first SCI transmitted by another terminal, so as to know a resource reserved by another terminal. Then, when performing resource selection, the terminal device excludes the resource reserved by another terminal, thereby avoiding resource collision. The following will introduce a sensing-based resource selection method in an SL communication system with reference to FIG. 11.

### Sensing-based resource selection method

Referring to FIG. 11, the terminal device can trigger resource selection or reselection in slot *n.* In some implementations, slot *n* can be a slot in which a higher layer triggers a physical layer to report a candidate resource set. A resource selection window starts from *n*+ *T₁* to *n*+ *T₂,* which is denoted as [*n+T₁, n*+*T₂*]*.* 0 <= *T₁* <= *T_{proc,1},* and *T_{proc,1}* = 3, 5, 9, 17 slots if a subcarrier spacing is 15, 30, 60, 120 kilohertz (kHz). *T₂ₘᵢₙ <= T₂ <=* remaining packet delay budget (PDB) of service, and a set of values of *T₂ₘᵢₙ* is {1, 5, 10, 20} * 2*µ* slots, where *µ* = 0, 1, 2, 3 and correspond subcarrier spacings of 15, 30, 60, 120 kHz. The terminal device determines *T₂ₘᵢₙ* from the set of values according to the priority of data to be transmitted by the terminal device, for example, if the subcarrier spacing is 15kHz, the terminal device determines *T₂ₘᵢₙ* from the set {1, 5, 10, 20} according to the priority of the data to be transmitted by the terminal device. If *T₂ₘᵢₙ* is greater than or equal to the remaining PDB of the service, *T₂* is equal to the remaining PDB of the service. The remaining PDB is a difference between a time corresponding to a delay requirement of data and a current time. For example, for a data packet arriving at slot *n,* the delay requirement is 50ms. Assuming that each slot is 1ms, if the current time is slot *n,* the remaining PDB is 50ms, and if the current time is slot *n+20,* the remaining PDB is 30ms.

Before resource selection, the terminal device needs to perform resource sensing in a sensing window from *n-T₀* to *n-T_{proc,0}*, where the value of *T₀* is 100ms or 1100ms. If the subcarrier spacing is 15, 30, 60, 120 kHz, *T_{proc,0}* is 1, 2, 4 slots. In general, the terminal device will monitor first SCI transmitted by another terminal in each slot (except a slot for transmission of the terminal device itself). If resource selection or reselection is triggered in slot *n,* the terminal device can perform resource sensing within *n-T₀ ~ n-T_{proc,0}.* The resource selection procedure is described below with reference to step 1 to step 2.

Step 1, the terminal device takes all candidate available resources in the resource selection window which belong to a resource pool used by the terminal device as resource set A. Specifically, there can be two cases, namely case 1-1 and case 1-2.

Case 1-1: if the terminal device performs data transmission in slot m within the sensing window without monitoring, the terminal device determines, according to slot m and each resource reservation period allowed in the resource pool used by the terminal device, one or more corresponding slots by taking the resource reservation period as a periodicity. The terminal device needs to exclude all resources located in the one or more slots from resource set A.

Case 1-2: if the terminal device has monitored first SCI transmitted on a PSCCH within slot m in the sensing window, the terminal device measures an SL-reference signal received power (RSRP) of the PSCCH or an SL-RSRP of a PSSCH scheduled by the PSCCH (i. e. an SL-RSRP of an associated PSSCH transmitted in the same slot as the PSCCH).

If the measured SL-RSRP is greater than a threshold SL-RSRP, the terminal device determines a resource(s) reserved for the PSCCH according to resource reservation information in SCI transmitted on the PSCCH. If the resource reserved belongs to resource set A, the terminal device excludes these reserved resources from set A.

If the remaining resources in resource set A after resource exclusion are less than X% of resources before resource exclusion, the threshold SL-RSRP is increased by 3 decibels (dB), and step 1 is performed again. The physical layer reports to the higher layer resource set A after resource exclusion as the candidate resource set.

Step 2, the higher layer selects a resource randomly from the reported candidate resource set to perform data transmission, that is, the terminal device selects a resource randomly from the candidate resource set to perform data transmission.

In some implementations, step 1 can be performed by the physical layer of the terminal device, and accordingly, the higher layer in step 2 can be a higher layer relative to the physical layer, such as a medium access control (MAC) layer.

It should be noted that, the foregoing threshold RSRP is determined according to a priority P1 carried on the PSCCH monitored by the terminal device and a priority P2 of the data to be transmitted by the terminal device.

In addition, whether the terminal device is to compare the measured RSRP of the PSCCH (i.e., PSCCH-RSRP) with the threshold SL-RSRP or to compare the measured RSRP of the PSSCH scheduled by the PSCCH (i.e., PSSCH-RSRP) with the threshold SL-RSRP depends on a resource pool configuration of the resource pool used by the terminal device. The resource pool can be configured by a network or pre-configured.

It should also be noted that, the possible values of the foregoing X are {20%, 35%, 50%}. The configuration of the resource pool used by the terminal device includes a correspondence between priorities and the possible values. The terminal device determines the value of X according to the priority of the data to be transmitted and the correspondence. The resource pool configuration can be configured by the network or pre-configured.

### Unlicensed spectrum

Unlicensed spectrum is a spectrum allocated by countries and regions that can be used for a radio device to perform communication. Such spectrum is generally considered to be a shared spectrum, that is, communication devices in the same communication system or in different communication systems can use such spectrum without the need to apply for an exclusive spectrum license from the government, as long as they meet regulatory requirements set on the spectrum by the country or region.

In order to enable various communication devices (or communication systems) that use an unlicensed spectrum for wireless communication to coexist harmoniously on this spectrum, some countries or regions have stipulated regulatory requirements that need to be met when using the unlicensed spectrum. For example, the communication devices follow a "listen-before-talk (LBT)" principle. LBT means that the communication device needs to perform channel sensing before performing signal transmission on an unlicensed spectrum channel. The communication device can perform signal transmission on the unlicensed spectrum channel only if the channel sensing result is that the channel is free. If the channel sensing result is that the channel is busy, the communication device is usually not allowed to perform signal transmission on the unlicensed spectrum channel.

With regard to signal transmission over an unlicensed spectrum, a concept related to channel occupancy is involved, for example, a channel occupancy time (COT), a maximum channel occupancy time (MCOT), a COT of the network device (such as a base station), and a COT of the terminal device.

An MCOT can refer to a maximum duration for which the communication device is allowed to use an unlicensed spectrum channel to perform signal transmission if LBT is successful. It should be understood that, the MCOT refers to a duration occupied by signal transmission. For communication devices having different channel access priority classes (CAPCs), MCOTs corresponding to these communication devices may be different. The maximum value of the MCOT can be set to, for example, 10ms.

The COT can refer to a duration for using an unlicensed spectrum channel to perform signal transmission after LBT is successful. Within the duration corresponding to the COT, channels occupied by the signal can be non-contiguous in time domain. In general, one COT cannot exceed 20ms. In addition, a duration occupied by signal transmission within the COT shall not exceed the MCOT.

The COT of the network device is also referred to as a network device-initiated COT. Taking gNB as an example of the network device, the COT of the network device can be referred to as a gNB-initiated COT. The COT of the network device can refer to one COT obtained by the network device after LBT is successful. Besides downlink transmission, the COT of the network device can also be used for the terminal device to perform uplink transmission if a certain condition is satisfied.

The COT of the terminal device is also referred to as a terminal device-initiated COT. Taking a UE as an example of the terminal device, the COT of the terminal device can be referred to as a UE-initiated COT. The COT of the terminal device can refer to one COT obtained by the terminal device after LBT is successful.

A COT sharing mechanism is described below by taking a sidelink in shared spectrum (SL-U) system as an example. It can be understood that, the COT sharing mechanism described below can also be applied to other communication systems.

In order to ensure that a communication device in the SL-U system can use a channel consistently within an obtained COT, a guard period (GP) symbol of 16 microseconds (µs) can be supported in an SL-U frame structure. In some implementations, the length of the GP can be reduced by reusing cyclic prefix (CP) extension.

The terminal device can complete COT sharing by indicating shared COT information, and a COT-sharing terminal device can realize COT sharing by inheriting or forwarding the shared COT information. The COT information can be carried in physical-layer control signaling such as SCI. If the shared COT information is carried in SCI, a processing time can be taken into consideration for implementation of COT sharing. The processing time can be a time for the terminal device to receive and decode the shared COT information carried in the SCI. Further, a relationship between the processing time and the minimum sensing time regulated by the regulations can be taken into consideration.

The shared COT information indicated by a COT-initiating terminal device can include one or more of: a remaining COT duration, an available sub-band (the information can be obtained from resource indication information carried in SCI), CAPC information, or a shared COT identity (ID), etc.

The shared COT information inherited by the COT-sharing terminal device can include: a remaining COT duration, an available sub-band (the information can be obtained from resource indication information carried in SCI), CAPC information, or a shared COT ID, etc.

The shared COT ID can include at least one or more of: a target terminal ID, a terminal group ID, a service ID, or an SL zone ID.

Inheritance and forwarding of the shared COT information needs to satisfy the following processing-time condition: a duration from an end location of a symbol for receiving SCI to a start location of a symbol for transmitting the SCI is greater than or equal to a first duration (which can be, for example, represented by *Tproc, SL*-*U*), where *Tproc, SL-U* can be a processing time that needs to be considered for inheritance and forwarding of the shared COT information.

If the terminal device has received multiple pieces of shared COT information satisfying the processing-time condition, scheme 1 and/or 2 can be taken into consideration to select appropriate shared COT information for inheritance and forwarding.

Scheme 1, the terminal device can select, according to remaining COT durations in the multiple pieces of shared COT information, to inherit and forward shared COT information corresponding to the longest remaining COT duration. The shared COT information corresponding to the longest remaining COT duration to be forwarded by the terminal device can be determined with respect to a transmission time of the terminal device.

Scheme 2, if remaining COT durations determined according to the multiple pieces of shared COT information are the same, the terminal device can select, according to CAPC values in the multiple pieces of shared COT information, to inherit and forward shared COT information corresponding to the largest CAPC value.

It should be noted that, the foregoing multiple pieces of shared COT information can be multiple pieces of shared COT information that can be applied to the terminal device. Except the foregoing schemes, inheritance and forwarding of the COT information can also be performed based on other information, for example, inheritance and forwarding of the COT information can be performed based on resource block (RB) set information in the shared COT information.

If a condition for COT sharing is satisfied, the terminal device is allowed to implement COT sharing.

As an implementation, the condition for COT sharing can be determined based on the shared COT ID. For example, a terminal group can be determined based on the shared COT ID, where COT sharing can be implemented between terminal devices in the terminal group.

As an implementation, the COT sharing mechanism may also be based on implicit group indication, that is, whether a COT shared by another terminal is valid is determined according to an evaluation result of a responding terminal device. The COT-sharing evaluation criterion of the responding terminal device can include the following: an expected COT sharing range/zone and a channel quality measurement of the responding terminal device. The expected COT sharing range/zone can be determined by means of an SL zone ID or RSRP measurement, etc. The channel quality measurement of the responding terminal device can include, for example, an RSRP threshold or a constant bit rate (CBR)-related measurement, etc.

### Channel access type for unlicensed spectrum

In some communication systems (such as an NR-U system), a channel access type in which channel access is performed through LBT is introduced. In addition, the communication system may also support channel access by means of short control signaling transmission (SCSt). The above two channel access types will be introduced below.

The basic concept of LBT has been introduced above, and several types of LBT (i. e. several LBT-based channel access types) will be introduced below.

Type 1 LBT can also be referred to as multi-slot channel sensing with contention window size adjustment-based random backoff. In Type 1 LBT, the communication device can initiate channel occupancy with a duration of *T_{mcot}* according to a CAPC *p*. If the network device applies Type 1 LBT, the network device can share a COT with the terminal device in addition to transmitting data of the network device itself during the COT, where sharing the COT with terminal device means allowing the terminal device to perform data transmission within a duration corresponding to the COT (i. e. a COT obtained by the network device through channel access). Likewise, if the terminal device applies Type 1 LBT, the terminal device can share a COT with the network device in addition to transmitting data of the terminal device itself during the COT. The following table gives CAPCs and parameters corresponding to the CAPCs when the terminal device performs Type 1 LBT.

**Table 1 Channel access parameters corresponding to different channel priorities**

| *p* | *mₚ* | *CW_{min,p}* | *CW_{max,p}* | *T_{mcot,p}* | Allowed *CWₚ* sizes |
|---|---|---|---|---|---|
| 1 | 2 | 3 | 7 | 2ms | {3,7} |
| 2 | 2 | 7 | 15 | 4ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

In Table 1, *mₚ* refers to the number of backoff slots corresponding to the CAPC *p*. *CW_{P}* refers to a contention window (CW) size corresponding to the CAPC *p*. *CW_{min,p}* refers to a minimum value of a *CW_{P}* size corresponding to the CAPC *p*. *CW_{max,p}* refers to a maximum value of the *CW_{P}* size corresponding to the CAPC *p*. *T_{mcot,p}* refers to an MCOT corresponding to the CAPC *p*. In the four CAPCs illustrated in Table 1, *p*=1 means the highest priority.

Type 2 LBT can also be referred to as a channel access type based on a fixed-duration channel-sensing slot. Type 2 LBT includes Type 2A LBT, Type 2B LBT, and Type 2C LBT.

In Type 2A LBT, the communication device can perform single-slot channel sensing for 25µs, i. e., the communication device can perform channel sensing for 25µs before data transmission. The 25µs channel sensing can consist of one 16µs channel sensing and one 9µs channel sensing. If the two sensing results both indicate that the channel is idle, it can be considered that the channel is idle, and channel access can be performed.

In Type 2B LBT, the communication device can perform single-slot channel sensing for 16µs. During channel sensing, if the channel is listened to be idle by the communication device for more than 4µs within the last 9µs, the channel can be considered to be idle.

In Type 2C LBT, the communication device can perform data transmission directly on a channel without sensing the channel. In Type 2C LBT, a time difference between the current transmission and the last transmission is less than or equal to 16µs. In other words, if a time difference between two transmissions is less than or equal to 16µs, the two transmissions can be considered to be the same transmission without channel sensing. It should be noted that, in Type 2C LBT, a transmission duration of the communication device is restricted, and generally cannot exceed 584µs.

The above has introduced an LBT-based channel access type, and the following will introduces SCSt. On an unlicensed spectrum, in order to improve success rate of channel access of a communication device when transmitting control signaling, SCSt is introduced. In SCSt, the communication device does not have to listen to a channel to determine whether there is transmission of another signal on the channel. For example, in SCSt, the communication device transmits a management and control frame without sensing a channel to determine whether there is transmission of another signal on the channel. In other words, if the communication device applies SCSt, the communication device can access a channel for transmission without sensing the channel. However, if SCSt is applied, it is necessary to satisfy a certain condition. For example, if the communication device expects to apply SCSt for channel access, the communication device needs to satisfy one or more of the following conditions: within an observation period of 50ms, the number of times of applying SCSt is less than or equal to 50; and the duration occupied by SCSt does not exceed 2.5ms within the observation period of 50ms.

It should be noted that, LBT is generally referred to as channel access. Type 1 LBT can be referred to as a Type 1 channel access type. Type 2A LBT can be referred to as a Type 2A channel access type. Type 2B LBT can be referred to as a Type 2B channel access type. Type-2C LBT can be referred to as a Type 2C channel access type. In embodiments of the disclosure, LBT and channel access can be interchangeable.

In addition, in embodiments of the disclosure, the unlicensed spectrum can also be referred to as a "shared spectrum" or an "unlicensed spectrum used for SL transmission", which is not limited in embodiments of the disclosure.

The type of LBT and the relationship between LBT parameters and CAPCs are introduced above, and a CAPC of a radio bearer and a CAPC of a MAC control element (MAC CE) will be introduced below.

In some implementations, the CAPC of the radio bearer and/or the CAPC of the MAC CE can be pre-defined (or fixed). In other implementations, the CAPC of the radio bearers and/or the CAPC of the MAC CE can be configurable.

Case 1, a CAPC of a padding buffer status report (BSR) and a CAPC of a recommended bit rate MAC CE are fixed to the lowest priority.

Case 2, a CAPC of signaling radio bearer (SRB) 0, a CAPC of SRB1, a CAPC of SRB3, and CAPCs of other MAC CEs are fixed to the highest priority.

Case 3, a CAPC of SRB2 and a CAPC of a data radio bearer (DRB) can be configured by the network device.

In some scenarios, when performing Type 1 LBT to transmit an uplink transport block (TB) (see technical specification (TS) 37.213 [37], clause 4.2.1.1), and if no CAPC is indicated in downlink control information (DCI), the terminal device can select a CAPC as follows.

If only a MAC CE(s) is included in the TB, the CAPC selected by the terminal device can be the highest priority CAPC of the MAC CEs included in the TB.

If a common control channel-service data unit(s) (CCCH SDU(s)) is included in the TB, the CAPC selected by the terminal device can be the highest priority CAPC.

If a dedicated control channel-SDU(s) (DCCH SDU(s)) is included in the TB, the CAPC selected by the terminal device can be the highest priority CAPC of the DCCH(s) included in the TB.

In addition, the lowest priority CAPC of logical channel(s) with MAC SDU multiplexed in the TB is used otherwise.

### Logical channel prioritization (LCP)

In a scenario of SL transmission, LCP can be understood as a procedure of prioritizing different logical channels when a new MAC PDU is generated, and determining transmission of the amounts of data transmitted on different logical channels/MAC CEs.

In some cases, in a scenario of SL transmission (e. g., an NR-V2X system), the transmission mode for data carried on a logical channel needs to be determined based on a configured grant.

For example, if a current configured grant is configured grant Type 1, the data carried on the logical channel is allowed to be carried on configured grant Type 1.

For another example, a current configured grant is determined according to a configured grant list associated with the logical channel, and accordingly, the data carried on the logical channel is allowed to be carried on the current configured grant.

Then, from the set of logical channels that satisfy the conditions, a logical channel(s) for carrying is selected, and the amount of data that can be carried on each logical channel is determined. In some implementations, the procedure of selecting a logical channel can include the following two steps.

Step 1, select a destination, which has a logical channel with the highest priority among current candidate logical channels in SL logical channels that have SL data available for transmission and belong to the destination of the SL data.

Step 2, select a logical channel from the logical channels belonging to the selected destination. For example, resources are allocated to a logical channel with the highest priority among logical channels belonging to the selected destination and satisfying the above restriction conditions, so as to transmit SL data to-be-transmitted.

At present, on a shared spectrum, two channel access types are supported, namely a first channel access type and a second channel access type, where the two channel access types are channel access procedures in which the shared spectrum is listened before transmitting first SL data to-be-transmitted on the shared spectrum. In some cases, the terminal device can access the shared spectrum in the first channel access type, or can access the shared spectrum in the second channel access type. At present, the behaviour of the terminal device in the above cases is not yet specified in a protocol, and as a result, the terminal device is unable to transmit SL data on the shared spectrum.

Taking Type 1 LBT as an example of the first channel access type and Type 2 LBT as an example of the second channel access type, during execution of Type 1 LBT by the terminal device, another terminal shares a COT with the terminal device. However, the behavior of the terminal device in this case is not taken into consideration in the communication protocol, and as a result, the terminal device is unable to transmit SL data on the shared spectrum.

Therefore, in order to avoid the foregoing problem, embodiments of the disclosure provide a wireless communication method. The following will introduce a wireless communication method in embodiments of the disclosure with reference to FIG. 12. FIG. 12 is a schematic flowchart of a wireless communication method according to embodiments of the disclosure. The method illustrated in FIG. 12 includes step S1210.

Step S1210, a terminal device determines to transmit first SL data on a shared spectrum based on a first channel access type and/or a second channel access type.

The first channel access type is different from the second channel access type. In some implementations, the type of the first channel access type can be different from the type of the second channel access type. For example, the first channel access type can be Type 1 LBT described above, and accordingly, the second channel access type can be Type 2 LBT described above.

In other implementations, a CAPC associated with the first channel access type can be different from a CAPC associated with the second channel access type. For example, the first channel access type and the second channel access type are both Type 2 LBT. However, since the first channel access type and the second channel access type respectively correspond to COTs shared by two different terminal devices, the CAPC associated with the first channel access type is different from the CAPC associated with the second channel access type.

In embodiments of the disclosure, the first channel access type and the second channel access type can be two channel access types which are of different types and are associated with different CAPCs. For example, the first channel access type is Type 1 LBT and the value of the CAPC associated with the first channel access type is *p1*, and the second channel access type is Type 2 LBT and the value of the CAPC associated with the second channel access type is *p2*, where *p1* is different from *p2*.

It should be noted that, the CAPC can be understood as a CAPC priority, and the value of the CAPC (also referred to as "CAPC value") can be understood as a CAPC priority level. In general, a lower CAPC value corresponds to a higher-priority CAPC, and on the contrary, a higher CAPC value corresponds to a lower-priority CAPC. In embodiments of the disclosure, a lower CAPC value corresponds to a lower-priority CAPC, and on the contrary, a higher CAPC value corresponds to a higher-priority CAPC. Embodiments of the disclosure are not limited in this regard. For ease of understanding, in the following elaborations, a lower CAPC value corresponds to a higher-priority CAPC, and on the contrary, a higher CAPC value corresponds to a lower-priority CAPC.

In addition, for ease of differentiation, in the following elaborations, the CAPC is represented by a CAPC priority, and the CAPC value is represented by a value of the CAPC priority, that is, the value of the CAPC priority represents a CAPC priority level. That is, a lower CAPC value corresponds to a higher-priority CAPC, and on the contrary, a higher CAPC value corresponds to a lower-priority CAPC.

In some implementations, the second channel access type can be shared by another terminal via first information. That is, the method further includes the following. The terminal device receives the first information during channel access of the terminal device based on the first channel access type. The foregoing step S1210 includes the following. In response to the first information, the terminal device determines to transmit the first SL data on the shared spectrum based on the first channel access type and/or the second channel access type.

In some implementations, the first information indicates information of a shared COT to the terminal device. In embodiments of the disclosure, the first information can be, for example, the shared COT information introduced above. In embodiments of the disclosure, the first information can include part of information in the foregoing shared COT information, or the first information can further include other information related to the shared COT, which is not limited in embodiments of the disclosure.

In some implementations, the shared COT is associated with the second channel access type, for example, SL resource(s) within the shared COT includes an SL resource that the terminal device attempts to access in the second channel access type.

As described above, the terminal device receives the first information during channel access of the terminal device based on the first channel access type. In this case, "the terminal device determines to transmit the first SL data on the shared spectrum based on the first channel access type" can mean that the terminal device continues to perform channel access in the first channel access type, and transmits the first SL data after access is successful.

"The terminal device determines to transmit the first SL data on the shared spectrum based on the second channel access type" can mean that the terminal device stops channel access in the first channel access type, and performs the second channel access type based on the shared COT and transmits the first SL data after access is successful.

"The terminal device determines to transmit the first SL data on the shared spectrum based on the first channel access type and the second channel access type" can mean that the terminal device continues to perform channel access in the first channel access type, and performs the second channel access type based on the shared COT at the same time and then transmits the first SL data after access is successful. It should be noted that, "access is successful" can mean that channel access in the first channel access type is successful, or can mean that channel access in the second channel access type is successful, or can mean that channel access in the first channel access type and the second channel access type is successful.

In some implementations, the terminal device can select the first channel access type and/or the second channel access type based on second information. The second information is associated with one or more of: terminal capability of the terminal device; whether the shared COT is usable; information of the first channel access type; information of SL data to-be-transmitted, where the SL data to-be-transmitted includes the first SL data; whether the terminal device expects to share an obtained COT with another terminal; or information of an SL resource selected by the terminal device.

As an example, the second information is associated with the terminal-device capability of the terminal device, where the terminal capability of the terminal device indicates whether the terminal device supports performing channel access in both the first channel access type and the second channel access type at the same time. In some implementations, the terminal capability can indicate, via the number of channel access types that can be performed at the same time by the terminal device, whether the terminal device supports performing channel access in both the first channel access type and the second channel access type at the same time.

For example, if the number of channel access types that can be performed at the same time by the terminal device is 1, it indicates that the terminal device does not support performing channel access in both the first channel access type and the second channel access type at the same time. For another example, if the number of channel access types that can be performed at the same time by the terminal device is 2, it indicates that the terminal device supports performing channel access in the first channel access type and the second channel access type at the same time.

Accordingly, if the terminal capability indicates that the terminal device supports performing channel access in both the first channel access type and the second channel access type at the same time, the terminal device can determine to transmit the first SL data based on the first channel access type and the second channel access type. Alternatively, in embodiments of the disclosure, if the terminal capability indicates that the terminal device supports performing channel access in both the first channel access type and the second channel access type at the same time, the terminal device can determine to transmit the first SL data based on the first channel access type, or the terminal device can determine to transmit the first SL data based on the second channel access type. Embodiments of the disclosure are not limited in this regard.

As an example, the second information is associated with whether the shared COT is usable. In some implementations, if the shared COT is usable, the terminal device can determine to transmit the first SL data based on the second channel access type. Alternatively, in embodiments of the disclosure, if the shared COT is usable, the terminal device can determine to transmit the first SL data based on the second channel access type and the first channel access type. On the contrary, if the shared COT is not usable, the terminal device can determine to transmit the first SL data based on the first channel access type.

In some implementations, whether the shared COT is usable is determined based on one or more of: a CAPC associated with the shared COT; a transmission mode associated with the shared COT; a destination of SL communication associated with the shared COT; a remaining duration of the shared COT; a terminal device sharing the shared COT; SL resource(s) within the shared COT; information of SL data to-be-transmitted, where the SL data to-be-transmitted includes the first SL data; or a configuration from a network device.

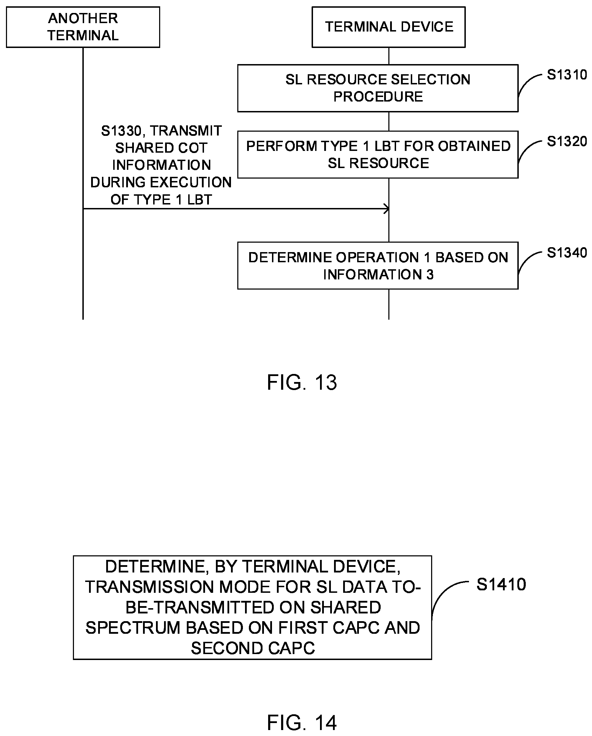

In some implementations, whether the shared COT is usable can be determined based on the CAPC associated with the shared COT. For example, whether the shared COT is usable can be determined based on a CAPC associated with the first SL data and the CAPC associated with the shared COT. If the CAPC associated with the first SL data is higher than or equal to the CAPC associated with the shared COT, the shared COT is usable. If the CAPC associated with the first SL data is lower than the CAPC associated with the shared COT, the shared COT is not usable. Alternatively, in some implementations, if the CAPC associated with the first SL data is lower than the CAPC associated with the shared COT, the shared COT is usable, which will be described in detail with reference to the methods illustrated in FIG. 14 to FIG. 15, and will not be elaborated herein for the sake of brevity.

It should be noted that, the CAPC associated with the shared COT can be, for example, a CAPC indicated by the foregoing shared COT information, such as a CAPC used by another terminal that has initiated the shared COT during Type 1 LBT, which is not limited in embodiments of the disclosure.

In some implementations, whether the shared COT is usable can be determined based on the transmission mode associated with the shared COT. For example, if the transmission mode for the first SL data matches the transmission mode associated with the shared COT, the shared COT is usable. If the transmission mode for the first SL data does not match the transmission mode associated with the shared COT, the shared COT is not usable.

The transmission mode can include one or more of groupcast, unicast, or broadcast. "The transmission mode for the first SL data matches the transmission mode associated with the shared COT" can be mean that if the transmission mode associated with the shared COT includes the transmission mode for the first SL data, then the transmission mode for the first SL data matches the transmission mode associated with the shared COT. For example, if the transmission mode for the first SL data is groupcast and the transmission mode associated with the shared COT includes groupcast, then the transmission mode for the first SL data matches the transmission mode associated with the shared COT.

On the contrary, "the transmission mode for the first SL data does not match the transmission mode associated with the shared COT can mean that if the transmission mode associated with the shared COT does not include the transmission mode for the first SL data, then the transmission mode for the first SL data does not match the transmission mode associated with the shared COT. For example, if the transmission mode for the first SL data is groupcast but the transmission mode associated with the shared COT does not include groupcast, then the transmission mode for the first SL data does not match the transmission mode associated with the shared COT.

It should be noted that, the transmission mode associated with the shared COT, for example, can be indicated by the foregoing shared COT information, which is not limited in embodiments of the disclosure.

In some implementations, whether the shared COT is usable can be determined based on the destination of SL communication associated with the shared COT. For example, if the destination of the first SL data satisfies a destination requirement associated with the shared COT, the shared COT is usable. If the destination of the first SL data does not satisfy the destination requirement associated with the shared COT, the shared COT is not usable.

"The destination of the first SL data satisfies the destination requirement associated with the shared COT" can be replaced by "the destination of the first SL data matches the destination associated with the shared COT", or "the destination associated with the shared COT includes the destination of the first SL data".

On the contrary, "the destination of the first SL data does not satisfy the destination requirement associated with the shared COT" can be replaced by "the destination of the first SL data does not match the destination associated with the shared COT", or "the destination associated with the shared COT does not include the destination of the first SL data".

For example, the destination associated with the shared COT is a terminal device that has initiated the shared COT. In this case, if the destination of the first SL data is the foregoing terminal device sharing the COT, it indicates that the destination of the first SL data satisfies the destination requirement associated with the shared COT. On the contrary, if the destination of the first SL data is a terminal except the terminal device sharing the COT, it indicates that the destination of the first SL data does not satisfy the destination requirement associated with the shared COT.

It should be noted that, the destination of SL communication associated with the shared COT can be, for example, a destination indicated by the foregoing shared COT information. For details thereof, reference can be made to the foregoing related elaborations of the destination, which is not limited in embodiments of the disclosure.

In some implementations, whether the shared COT is usable can be determined based on the remaining duration of the shared COT, for example, can be determined based on the remaining duration of the shared COT and a transmission duration of the first SL data. If the remaining duration of the shared COT is greater than or equal to the transmission duration of the first SL data, the shared COT is usable. On the contrary, if the remaining duration of the shared COT is less than the transmission duration of the first SL data, the shared COT is not usable.

In embodiments of the disclosure, there is no limitation on the manner for determining, based on the remaining duration of the shared COT, whether the shared COT is usable. For example, whether the shared COT is usable can be determined based on the remaining duration of the shared COT and a threshold duration. That is, if the remaining duration of the shared COT is greater than or equal to the threshold duration, the shared COT is usable. If the remaining duration of the shared COT is less than the threshold duration, the shared COT is not usable.

It should be noted that, the remaining duration of the shared COT can be, for example, a remaining duration indicated by the foregoing shared COT information, which is not limited in embodiments of the disclosure.

In some implementations, whether the shared COT is usable can be determined based on a terminal device sharing the COT. For ease of illustration, the terminal device sharing the COT is referred to as terminal 1, and a terminal device transmitting the first SL data is referred to as terminal 2.

For example, whether the shared COT is usable can be determined based a distance between terminal 1 and terminal 2. As such, it is possible to prevent terminal 1 at long distance from sharing the COT with terminal 2, in which case the SL resource within the shared COT may be unusable (for example, there is serious interference) for terminal 2, thereby improving appropriateness of COT sharing.

If the distance between terminal 1 and terminal 2 is greater than or equal to a threshold distance, the shared COT is not usable; on the contrary, if the distance between terminal 1 and terminal 2 is less than the threshold distance, the shared COT is usable.

As another example, whether the shared COT is usable can be determined based on a signal quality and/or a signal received power (for example, RSRP) between terminal 1 and terminal 2, which prevents terminal 1 with poor signal quality or poor signal received power from sharing the COT with terminal 2, in which case terminal 1 is unable to receive accurately the first SL data due to poor signal quality or poor signal received power if terminal 2 transmits the first SL data to terminal 1 on the SL resource within the shared COT.

If the signal quality between terminal 1 and terminal 2 is greater than or equal to a signal quality threshold, the shared COT is usable; on the contrary, if the signal quality between terminal 1 and terminal 2 is less than the signal quality threshold, the shared COT is not usable. Additionally or alternatively, if the signal received power between terminal 1 and terminal 2 is greater than or equal to a signal received power threshold, the shared COT is usable; on the contrary, if the signal received power between terminal 1 and terminal 2 is less than the signal received power threshold, the shared COT is not usable.

In some implementations, whether the shared COT is usable can be determined based on the SL resource within the shared COT, for example, can be determined based on the SL resource within the shared COT and an SL resource required for transmitting the first SL data. If the SL resource within the shared COT is greater than or equal to the SL resource required for transmitting the first SL data, the shared COT is usable; on the contrary, if the SL resource within the shared COT is less than the SL resource required for transmitting the first SL data, the shared COT is not usable.

In embodiments of the disclosure, there is no limitation on the manner for determining, based on the SL resource within the shared COT, whether the shared COT is usable. For example, the determination can be made based on the SL resource within the shared COT and a resource threshold. If the SL resource within the shared COT is greater than or equal to the resource threshold, the shared COT is usable. If the SL resource within the shared COT is less than the resource threshold, the shared COT is not usable.

For another example, the determination can be made based on whether there is a usable SL resource within the shared COT. If there is a usable SL resource within the shared COT, the shared COT is usable; on the contrary, if there is no usable SL resource within the shared COT, the shared COT is not usable. The usable SL resource can be understood as an existing SL resource for a recipient terminal device or a candidate SL resource for the recipient terminal device, which is not limited in embodiments of the disclosure.

In some implementations, whether the shared COT is usable can be determined based on the information of the SL data to-be-transmitted. In some implementations, the information of the SL data to-be-transmitted can include a CAPC associated with the SL data to-be-transmitted and/or a destination of the SL data to-be-transmitted.

Exemplarily, the information of the SL data to-be-transmitted includes the CAPC associated with the SL data to-be-transmitted, and whether the shared COT is usable is determined based on the CAPC associated with the SL data to-be-transmitted and the CAPC associated with the shared COT. If the CAPC associated with the SL data to-be-transmitted is higher than or equal to the CAPC associated with the shared COT, the shared COT is usable. If the CAPC associated with the SL data to-be-transmitted is lower than the CAPC associated with the shared COT, the shared COT is not usable. Alternatively, in some implementations, if the CAPC associated with the SL data to-be-transmitted is lower than the CAPC associated with the shared COT, the shared COT is usable, which will be described in detail with reference to the methods illustrated in FIG. 14 to FIG. 15, and will not be elaborated herein for the sake of brevity.

It should be noted that, the CAPC associated with the shared COT can be, for example, a CAPC indicated by the foregoing shared COT information, such as a CAPC used by another terminal that has initiated the shared COT during Type 1 LBT, which is not limited in embodiments of the disclosure.

In addition, the SL data to-be-transmitted described above can include the first SL data, in other words, the first SL data can be part or all of the SL data to-be-transmitted, and embodiments of the disclosure are not limited in this regard.

Exemplarily, the information of the SL data to-be-transmitted includes the destination of the SL data to-be-transmitted. If the destination of the SL data to-be-transmitted satisfies the destination requirement associated with the shared COT, the shared COT is usable. If the destination of the SL data to-be-transmitted does not satisfy the destination requirement associated with the shared COT, the shared COT is not usable.

"The destination of the SL data to-be-transmitted satisfies the destination requirement associated with the shared COT" can be replaced by "the destination of the SL data to-be-transmitted matches the destination associated with the shared COT", or "the destination associated with the shared COT includes the destination of the SL data to-be-transmitted".

On the contrary, "the destination of the SL data to-be-transmitted does not satisfy the destination requirement associated with the shared COT" can be replaced by "the destination of the SL data to-be-transmitted does not match the destination associated with the shared COT", or "the destination associated with the shared COT does not include the destination of the SL data to-be-transmitted".

For example, the destination associated with the shared COT is a terminal device sharing the shared COT. In this case, if the destination of the SL data to-be-transmitted is the terminal device sharing the COT, it indicates that the destination of the SL data to-be-transmitted satisfies the destination requirement associated with the shared COT. On the contrary, if the destination of the SL data to-be-transmitted is a terminal except the terminal device sharing the COT, it indicates that the destination of the SL data to-be-transmitted does not satisfy the destination requirement associated with the shared COT.

In some implementations, whether the shared COT is usable can be determined based on the configuration from the network device. If the network device configures the shared COT to be usable for the terminal device, the shared COT is usable. Additionally or alternatively, if the network device configures the shared COT to be unusable for the terminal device, the shared COT is not usable. By determining whether the shared COT is usable based on the configuration from the network device, it is conducive to avoiding waste of a scheduling procedure of the network device. For example, in mode 1, the network device can configure an SL resource for the terminal device. In this case, if the terminal device transmits the first SL data by using the shared COT, it may result in waste of a resource configuration procedure of the network device for the terminal device. In this case, if the network device configures the shared COT to be unusable for the terminal device, it is possible to avoid waste of the resource configuration procedure.

Exemplarily, the second information is associated with the information of the first channel access type, and then the information of the first channel access type includes one or more of: a CAPC associated with the first channel access type, an execution duration of the first channel access type, a backoff counter value of the first channel access type, the number of successes of the first channel access type, the number of failures of the first channel access type, a transmission mode associated with the first channel access type, or whether SL resources associated with the first channel access type are consecutive.

In some implementations, the information of the first channel access type can include the CAPC associated with the first channel access type. Accordingly, the terminal device can determine, according to the CAPC associated with the first channel access type, to transmit the first SL data based on the first channel access type and/or the second channel access type.

For example, if the value of the CAPC associated with the first channel access type is less than or equal to the value of the CAPC of the first SL data, the terminal device can determine to transmit the first SL data based on the second channel access type. Alternatively, the terminal device can determine to transmit the first SL data based on the first channel access type and the second channel access type. On the contrary, if the value of the CAPC associated with the first channel access type is greater than the value of the CAPC of the first SL data, the terminal device can determine to transmit the first SL data based on the first channel access type.

For another example, if the value of the CAPC associated with the first channel access type is less than or equal to the value of the CAPC associated with the second channel access type, the terminal device can determine to transmit the first SL data based on the first channel access type. Alternatively, the terminal device can determine to transmit the first SL data based on the first channel access type and the second channel access type. On the contrary, if the value of the CAPC associated with the first channel access type is greater than the CAPC associated with the second channel access type, the terminal device can determine to transmit the first SL data based on the second channel access type. Alternatively, the terminal device can determine to transmit the first SL data based on the first channel access type and the second channel access type.

In some implementations, the information of the first channel access type can include the execution duration of the first channel access type. Accordingly, the terminal device can determine, according to the execution duration of the first channel access type, to transmit the first SL data based on the first channel access type and/or the second channel access type.

For example, if the execution duration of the first channel access type is less than or equal to a threshold duration, the terminal device can determine to transmit the first SL data based on the first channel access type. Alternatively, the terminal device can determine to transmit the first SL data based on the first channel access type and the second channel access type. On the contrary, if the execution duration of the first channel access type is greater than the threshold duration, the terminal device can determine to transmit the first SL data based on the second channel access type, thereby improving success rate of transmitting the first SL data.

In some implementations, the information of the first channel access type can include the backoff counter value of the first channel access type. Accordingly, the terminal device can determine, according to the backoff counter value of the first channel access type, to transmit the first SL data based on the first channel access type and/or the second channel access type.

For example, if the backoff counter value of the first channel access type is less than or equal to a threshold backoff counter value, the terminal device can determine to transmit the first SL data based on the first channel access type. Alternatively, the terminal device can determine to transmit the first SL data based on the first channel access type and the second channel access type. On the contrary, if the backoff counter value of the first channel access type is greater than the threshold backoff counter value, the terminal device can determine to transmit the first SL data based on the second channel access type, which is conducive to reducing delay before transmitting the first SL data.

In some implementations, the information of the first channel access type can include the number of successes of the first channel access type. Accordingly, the terminal device can determine, according to the number of successes of the first channel access type, to transmit the first SL data based on the first channel access type and/or the second channel access type.

For example, if the number of successes of the first channel access type is less than or equal to a threshold value, the terminal device can determine to transmit the first SL data based on the first channel access type. Alternatively, the terminal device can determine to transmit the first SL data in the first channel access type and the second channel access type. On the contrary, if the number of successes of the first channel access type is greater than the threshold value, the terminal device can determine to transmit the first SL data based on the second channel access type. Alternatively, the terminal device can determine to transmit the first SL data based on the first channel access type and the second channel access type, which helps to improve success rate of transmitting the first SL data.

In some implementations, the information of the first channel access type can include the number of failures of the first channel access type. Alternatively, the terminal device can determine, based on the number of failures of the first channel access type, to transmit the first SL data based on the first channel access type and/or the second channel access type.

For example, if the number of failures of the first channel access type is less than or equal to a threshold value, the terminal device can determine to transmit the first SL data based on the first channel access type. Alternatively, the terminal device can determine to transmit the first SL data based on the first channel access type and the second channel access type. On the contrary, if the number of failures of the first channel access type is greater than the threshold value, the terminal device can determine to transmit the first SL data based on the second channel access type. Alternatively, the terminal device can determine to transmit the first SL data based on the first channel access type and the second channel access type, which helps to improve success rate of transmitting the first SL data.

In some implementations, the information of the first channel access type can include the transmission mode associated with the first channel access type. The transmission mode associated with the first channel access type can include multiple consecutive slot transmission (MCSt) or non-MCSt.

Accordingly, the terminal device can determine, according to the transmission mode associated with the first channel access type, to transmit the first SL data based on the first channel access type and/or the second channel access type.

For example, if the transmission mode associated with the first channel access type is MCSt, the terminal device can determine to transmit the first SL data based on the first channel access type. Alternatively, the terminal device can determine to transmit the first SL data based on the first channel access type and the second channel access type. On the contrary, if the transmission mode associated with the first channel access type is non-MCSt, the terminal device can determine to transmit the first SL data based on the second channel access type. Alternatively, the terminal device can determine to transmit the first SL data based on the first channel access type and the second channel access type, which helps to improve success rate of transmitting the first SL data.

In some implementations, the information of the first channel access type can include whether the SL resources associated with the first channel access type is consecutive. The SL resources associated with the first channel access type can be understood as some or all of SL resources listened during channel access of the terminal device in the first channel access type.

Whether the SL resources associated with the first channel access type are consecutive can be construed as whether the SL resources associated with the first channel access type are consecutive in time domain.

Accordingly, according to whether the SL resources associated with the first channel access type are consecutive, the terminal device can determine to transmit the first SL data based on the first channel access type and/or the second channel access type.

For example, if the SL resources associated with the first channel access type are consecutive, the terminal device can determine to transmit the first SL data based on the first channel access type. Alternatively, the terminal device can determine to transmit the first SL data based on the first channel access type and the second channel access type. On the contrary, if the SL resources associated with the first channel access type are nonconsecutive, the terminal device can determine to transmit the first SL data based on the second channel access type. Alternatively, the terminal device can determine to transmit the first SL data based on the first channel access type and the second channel access type, which helps to reduce delay required before transmitting the first SL data.

Exemplarily, the second information is associated with the information of the SL data to-be-transmitted, and then the information of the SL data to-be-transmitted includes one or more of: a data amount of the SL data to-be-transmitted, a data priority of the SL data to-be-transmitted, a remaining PDB of the SL data to-be-transmitted, or a CAPC associated with the SL data to-be-transmitted.

The SL data to-be-transmitted can include the first SL data, in other words, the first SL data can be part or all of the SL data to-be-transmitted, and embodiments of the disclosure are not limited in this regard.

In some implementations, the information of the SL data to-be-transmitted includes the data amount of the SL data to-be-transmitted. Accordingly, the terminal device can determine, according to the data amount of the SL data to-be-transmitted, to transmit the first SL data based on the first channel access type and/or the second channel access type.

For example, if the data amount of the SL data to-be-transmitted is greater than or equal to a data amount threshold, the terminal device can determine to transmit the first SL data based on the first channel access type. Alternatively, the terminal device can determine to transmit the first SL data based on the first channel access type and the second channel access type. On the contrary, if the data amount of the SL data to-be-transmitted is less than the data amount threshold, the terminal device can determine to transmit the first SL data based on the second channel access type. Alternatively, the terminal device can determine to transmit the first SL data based on the first channel access type and the second channel access type, which is conducive to improving success rate of transmitting the first SL data.

For another example, if the data amount of the SL data to-be-transmitted is greater than or equal to the data amount threshold, the terminal device can determine to transmit the first SL data based on the second channel access type. Alternatively, the terminal device can determine to transmit the first SL data based on the first channel access type and the second channel access type. On the contrary, if the data amount of the SL data to-be-transmitted is less than the data amount threshold, the terminal device can determine to transmit the first SL data based on the first channel access type. Alternatively, the terminal device can determine to transmit the first SL data based on the first channel access type and the second channel access type, which helps to improve success rate of transmitting the first SL data.

In some implementations, the information of the SL data to-be-transmitted includes the data priority of the SL data to-be-transmitted. Accordingly, the terminal device can determine, according to the data priority of the SL data to-be-transmitted, to transmit the first SL data based on the first channel access type and/or the second channel access type.

For example, if the data priority of the SL data to-be-transmitted is higher than or equal to a data priority threshold, the terminal device can determine to transmit the first SL data based on the first channel access type. Alternatively, the terminal device can determine to transmit the first SL data based on the first channel access type and the second channel access type. On the contrary, if the data priority of the SL data to-be-transmitted is lower than the priority threshold, the terminal device can determine to transmit the first SL data based on the second channel access type. Alternatively, the terminal device can determine to transmit the first SL data based on the first channel access type and the second channel access type.

For another example, if the data priority of the SL data to-be-transmitted is greater than or equal to the data priority threshold, the terminal device can determine to transmit the first SL data based on the second channel access type. Alternatively, the terminal device can also determine to transmit the first SL data based on the first channel access type and the second channel access type. On the contrary, if the data priority of the SL data to-be-transmitted is lower than the priority threshold, the terminal device can determine to transmit the first SL data based on the first channel access type. Alternatively, the terminal device can determine to transmit the first SL data based on the first channel access type and the second channel access type.

In some implementations, the information of the SL data to-be-transmitted includes the remaining PDB of the SL data to-be-transmitted. Accordingly, the terminal device can determine, according to the remaining PDB of the SL data to-be-transmitted, to transmit the first SL data based on the first channel access type and/or the second channel access type.

For example, if the remaining PDB of the SL data to-be-transmitted is greater than or equal to a PDB threshold, the terminal device can determine to transmit the first SL data based on the first channel access type. Alternatively, the terminal device can determine to transmit the first SL data based on the first channel access type and the second channel access type. On the contrary, if the remaining PDB of the SL data to-be-transmitted is less than the PDB threshold, the terminal device can determine to transmit the first SL data based on the second channel access type. Alternatively, the terminal device can determine to transmit the first SL data based on the first channel access type and the second channel access type.

For another example, if the remaining PDB of the SL data to-be-transmitted is greater than or equal to the PDB threshold, the terminal device can determine to transmit the first SL data based on the second channel access type. Alternatively, the terminal device can also determine to transmit the first SL data in the first channel access type and the second channel access type. On the contrary, if the remaining PDB of the SL data to-be-transmitted is less than the PDB threshold, the terminal device can determine to transmit the first SL data based on the first channel access type. Alternatively, the terminal device can determine to transmit the first SL data based on the first channel access type and the second channel access type.

In some implementations, the information of the SL data to-be-transmitted includes the CAPC associated with the SL data to-be-transmitted. Accordingly, the terminal device can determine, according to the CAPC associated with the SL data to-be-transmitted, to transmit the first SL data based on the first channel access type and/or the second channel access type.

For example, if the CAPC associated with the SL data to-be-transmitted is higher than or equal to a CAPC threshold, the terminal device can determine to transmit the first SL data based on the first channel access type. Alternatively, the terminal device can determine to transmit the first SL data based on the first channel access type and the second channel access type. On the contrary, if the CAPC associated with the SL data to-be-transmitted is lower than the CAPC threshold, the terminal device can determine to transmit the first SL data based on the second channel access type. Alternatively, the terminal device can also determine to transmit the first SL data based on the first channel access type and the second channel access type.

For another example, if the CAPC associated with the SL data to-be-transmitted is higher than or equal to the CAPC threshold, the terminal device can determine to transmit the first SL data based on the second channel access type. Alternatively, the terminal device can determine to transmit the first SL data based on the first channel access type and the second channel access type. On the contrary, if the CAPC associated with the SL data to-be-transmitted is lower than the CAPC threshold, the terminal device can determine to transmit the first SL data based on the first channel access type. Alternatively, the terminal device can determine to transmit the first SL data based on the first channel access type and the second channel access type.

Exemplarily, the second information is associated with whether the terminal device expects to share the obtained COT with another terminal. Accordingly, the terminal device can determine, according to whether the terminal device expects to share the obtained COT with another terminal, to transmit the first SL data based on the first channel access type and/or the second channel access type.

For example, if the terminal device expects to share the obtained COT with another terminal, the terminal device can determine to transmit the first SL data based on the first channel access type. Alternatively, the terminal device can determine to transmit the first SL data based on the first channel access type and the second channel access type. On the contrary, if the terminal device does not expect to share the obtained COT to another terminal, the terminal device can determine to transmit the first SL data based on the second channel access type. Alternatively, the terminal device can determine to transmit the first SL data based on the first channel access type and the second channel access type.

Exemplarily, the second information is associated with the information of the SL resource selected by the terminal device. Accordingly, the terminal device can determine, according to the information of the SL resource selected by the terminal device, to transmit the first SL data based on the first channel access type and/or the second channel access type.

In some implementations, the information of the SL resource selected can include a resource location of the SL resource selected and/or the number of the SL resources selected.

For example, if the information of the SL resource selected includes the resource location of the SL resource selected, and the resource location of the SL resource selected is earlier than the SL resource within the shared COT, the terminal device can determine to transmit the first SL data based on the first channel access type. Alternatively, the terminal device can determine to transmit the first SL data based on the first channel access type and the second channel access type. On the contrary, if the resource location of the SL resource selected is not earlier than the SL resource within the shared COT, the terminal device can determine to transmit the first SL data based on the second channel access type. Alternatively, the terminal device can determine to transmit the first SL data based on the first channel access type and the second channel access type.

For another example, if the information of the SL resource selected includes the resource location of the SL resource selected, and the resource location of the SL resource selected is not earlier than the SL resource within the shared COT, the terminal device can determine to transmit the first SL data based on the first channel access type. Alternatively, the terminal device can determine to transmit the first SL data based on the first channel access type and the second channel access type. On the contrary, if the resource location of the SL resource selected is earlier than the SL resource within the shared COT, the terminal device can determine to transmit the first SL data based on the second channel access type. Alternatively, the terminal device can determine to transmit the first SL data based on the first channel access type and the second channel access type.

For example, if the information of the SL resource selected includes the number of the SL resources selected, and the number of the SL resources selected is greater than or equal to a threshold number, the terminal device can determine to transmit the first SL data based on the first channel access type. Alternatively, the terminal device can determine to transmit the first SL data based on the first channel access type and the second channel access type. On the contrary, if the number of the SL resources selected is less than the threshold number, the terminal device can determine to transmit the first SL data based on the second channel access type. Alternatively, the terminal device can determine to transmit the first SL data based on the first channel access type and the second channel access type.

For another example, if the information of the SL resource selected includes the number of the SL resources selected, and the number of the SL resources selected is greater than or equal to the threshold number, the terminal device can determine to transmit the first SL data based on the second channel access type. Alternatively, the terminal device can determine to transmit the first SL data based on the first channel access type and the second channel access type. On the contrary, if the number of the SL resources selected is less than the threshold number, the terminal device can determine to transmit the first SL data based on the first channel access type. Alternatively, the terminal device can determine to transmit the first SL data based on the first channel access type and the second channel access type.

In embodiments of the disclosure, the terminal device can also determine, according to pre-configured information (also referred to as "third information"), pre-defined information (also referred to as "third information"), or terminal implementation, to transmit the first SL data based on the first access mode and/or the second channel access type. Embodiments of the disclosure are not limited in this regard. The pre-configured information can be pre-configured for the terminal device by the network device. The pre-defined information can be pre-defined based on a communication protocol.

In embodiments of the disclosure, a parameter associated with the first channel access type and/or a parameter associated with the second channel access type introduced above can be understood as a parameter used by the terminal device during channel access.

In some scenarios, before performing channel access, the terminal device can obtain an SL resource in two resource selection modes introduced above, namely mode 1 or mode 2. Accordingly, during SL communication based on mode 1 or mode 2, a MAC layer of the terminal device can indicate to the physical layer of the terminal device the parameter associated with the first channel access type and/or the parameter associated with the second channel access type. In this case, the parameter associated with the first channel access type and/or the parameter associated with the second channel access type indicated to the physical layer by the MAC layer can be referred to as a parameter associated with the first channel access type and/or a parameter associated with the second channel access type that is associated with a resource selection procedure. The parameter associated with the first channel access type and/or the parameter associated with the second channel access type that is associated with the resource selection procedure can be used for the terminal device to obtain a resource, that is, the terminal device obtains the resource according to these parameters.

In some implementations, the parameter associated with the first channel access type described above can be understood as a parameter required for performing channel access in the first channel access type. For example, the parameter described above can include the number of consecutive transmissions (for example, the number of consecutive transmissions for MCSt) and/or the CAPC associated with the first channel access type. The information of the shared COT can include, for example, one or more of: the remaining duration of the shared COT, the duration of the shared COT, or a time-domain start location corresponding to the shared COT.

It should be noted that, the parameter (for example, the CAPC) associated with the first channel access type indicated to the physical layer by the MAC layer may be different from a parameter used by the terminal device during channel access corresponding to the first channel access type. For example, the CAPC associated with the first channel access type indicated to the physical layer by the MAC layer is different from the parameter associated with the first channel access type used for the terminal device to transmit the first SL data based on the first channel access type.

For example, the parameter associated with the first channel access type indicated to the physical layer by the MAC layer may be determined based on SL data to-be-transmitted during execution of mode 1. However, as time goes on, change may occur to the SL data to-be-transmitted (e. g., some data in the SL data to-be-transmitted may become invalid, or there is newly arrived SL data to-be-transmitted). In this case, change may occur to the parameter associated with the first channel access type. Then, the parameter used by the terminal device during channel access in the first channel access type is determined based on the changed SL data to-be-transmitted. Therefore, the parameter associated with the first channel access type indicated to the physical layer by the MAC layer may be different from the parameter used by the terminal device during channel access corresponding to the first channel access type.

Alternatively, in embodiments of the disclosure, the parameter associated with the first channel access type indicated to the physical layer by the MAC layer may be the same as the parameter used by the terminal device during channel access corresponding to the first channel access type.

It should be noted that, the parameter used by the terminal device during channel access based on the first channel access type is determined based on the changed SL data to-be-transmitted. Exemplarily, the parameter described above includes the CAPC associated with the first channel access type, and then the CAPC associated with the first channel access type can be determined based on the current SL data to-be-transmitted, where the current data to-be-transmitted can be, for example, SL data to-be-transmitted buffered in a cache of the terminal device.

In other implementations, the parameter associated with the second channel access type can include, for example, one or more of: the CAPC associated with the second channel access type, the number of consecutive transmissions (for example, the number of consecutive transmissions for MCSt), or the information of the shared COT. The information of the shared COT can include, for example, one or more of: the remaining duration of the shared COT, the duration of the shared COT, or a time-domain start location corresponding to the shared COT.

It should be noted that, the parameter (for example, the CAPC) associated with the second channel access type indicated to the physical layer by the MAC layer may be different from a parameter used by the terminal device during channel access corresponding to the second channel access type. For example, the CAPC associated with the second channel access type indicated to the physical layer by the MAC layer is different from a parameter associated with the second channel access type used for the terminal device to transmit the first SL data based on the second channel access type.

For example, the parameter associated with the second channel access type indicated to the physical layer by the MAC layer may be determined based on the SL data to-be-transmitted during execution of mode 1. However, as time goes on, change may occur to the SL data to-be-transmitted (e. g., some data in the SL data to-be-transmitted may become invalid, or there is newly arrived SL data to-be-transmitted). In this case, change may occur to the parameter associated with the first channel access type. Then, the foregoing parameter used by the terminal device during channel access based on the first channel access type is determined based on the changed SL data to-be-transmitted. Therefore, the parameter associated with the first channel access type indicated to the physical layer by the MAC layer may be different from the parameter used by the terminal device during channel access corresponding to the first channel access type.

Alternatively, in embodiments of the disclosure, the parameter associated with the first channel access type indicated to the physical layer by the MAC layer may be the same as the parameter used by the terminal device during channel access procedure corresponding to the first channel access type.

For ease of understanding, the following describes the wireless communication method according to embodiments of the disclosure with reference to FIG. 13 by taking Type 1 LBT as an example of the first channel access type and Type 2 LBT as an example of the second channel access type. FIG. 13 is a schematic flowchart of a wireless communication method according to another embodiment of the disclosure. The method illustrated in FIG. 13 includes step S1310 to step S1340.

Step S1310, an SL resource selection procedure is performed.

In some implementations, the above SL resource selection procedure can include resource sensing by a terminal device, e. g., mode 2 in the SL communication mode introduced above. In other implementations, the above SL resource selection procedure can include SL resource allocation to the terminal device by a network device, for example, mode 1 in the SL communication mode introduced above.

In mode 2, a MAC layer of the terminal device can send information 1 to a physical layer of the terminal device, where information 1 includes one or more of a CAPC associated with SL data to-be-transmitted, the number of consecutive transmissions for MCSt, and information of a shared COT.

It should be noted that, for the information of the shared COT, reference can be made to the illustration above, and can include one or more information in the information of the shared COT, for example, a remaining duration of the shared COT, a start location of a resource within the shared COT, etc.

In addition, in embodiments of the disclosure, information 1 can be carried in information of a parameter required for resource selection that is indicated to the physical layer by the MAC layer. The information of the parameter required for resource selection can include a priority of the SL data to-be-transmitted, a remaining PDB of the data to-be-transmitted, the number of retransmissions of the SL data to-be-transmitted, and the like.

In embodiments of the disclosure, no specific limitation is imposed on the object that the indicated information of the parameter required for resource selection and/or information 1 is intended for. For example, the information can be configured per resource selection procedure. For another example, the information can be specific per resource pool. For another example, the information can be specific per RB set. For another example, the information can be specific per RB set. For another example, the information can be specific per new transmission of TB. For another example, the information can be specific per service flow. For another example, the information can be specific per radio bearer. For another example, the information can be specific per transmission of the SL data to-be-transmitted.

Alternatively, in embodiments of the disclosure, information 1 and the indicated information of the parameter required for resource selection can be transmitted separately, which is not limited in embodiments of the disclosure.

In mode 1, the terminal device can transmit information 2 to the network device, where information 2 can include information associated with Type 1 LBT and/or information associated with Type 2 LBT.

The information associated with Type 1 LBT can include one or more of: a result of Type 1 LBT, a backoff counter value of Type 1 LBT, or an execution duration of Type 1 LBT, which is not specifically limited in embodiments of the disclosure.

The information associated with Type 2 LBT can include the information of the shared COT, for example, can include part or all of the information of the shared COT, which is not specifically limited in embodiments of the disclosure.

Step S1320, the terminal device performs Type 1 LBT for an obtained SL resource.

In some implementations, the MAC layer determines that the CAPC associated with the SL data to-be-transmitted in the current buffer is CAPC1, and sends CAPC1 to the physical layer. Accordingly, the physical layer can perform Type 1 LBT according to CAPC1.

It should be noted that, the foregoing CAPC1 can be the same as or different from the CAPC in information 1, which is not limited in embodiments of the disclosure. In some scenarios, compared with SL data to-be-transmitted in step S1310 of the terminal device, SL data to-be-transmitted in step S1320 of the terminal device changes (for example, part or all of the SL data to-be-transmitted in step S1310 becomes invalid; for another example, new SL data to-be-transmitted arrives before performing step S1320, then CAPC1 can be different from the CAPC in information 1.

Step S1330, during execution of Type 1 LBT, another terminal transmits shared COT information to the terminal device to share a COT with the terminal device.

In some implementations, the shared COT information indicates that a CAPC associated with the shared COT is CAPC2.

Step S1340, the terminal device determines operation 1 based on information 3.

In some implementations, operation 1 can include any one of: continuing to perform Type 1 LBT; stopping Type 1 LBT and performing Type 2 LBT based on the shared COT; or performing Type 2 LBT based on the shared COT and Type 1 LBT at the same time.

In some implementations, information 3 can include one or more of: terminal capability of the terminal device; whether the shared COT is usable; information of the first channel access type; information of SL data to-be-transmitted, where the SL data to-be-transmitted includes first SL data; whether the terminal device expects to share an obtained COT with another terminal; or information of an SL resource selected by the terminal device.

It should be noted that, for the manner for the terminal device to determine operation 1 based on information 3, reference can be made to the foregoing elaboration of the second information, and information 3 can implemented as the second information, which is not described again herein for the sake of brevity.

Alternatively, in embodiments of the disclosure, information 3 can be pre-configured information, pre-defined information, or information used for implementation of the terminal device, which is not limited in embodiments of the disclosure.

It should be noted that, in the scheme illustrated in FIG. 13, execution of Type 1 LBT in step S1320 is taken as an example for illustration. In some scenarios, if the obtained SL resource in step S1310 is an SL resource shared by another terminal via the shared COT, then in step S1320, the terminal device can perform Type 2 LBT, which is not limited in embodiments of the disclosure.

As introduced above, in some scenarios, a CAPC (also referred to as a "first CAPC") associated with the SL data to-be-transmitted may not match a CAPC (also referred to as a "second CAPC") associated with a channel access procedure performed by the terminal device. For example, the CAPC associated with the SL data to-be-transmitted is lower than the CAPC associated with the channel access procedure. In this case, the SL data to-be-transmitted cannot be transmitted on an SL resource listened during the channel access procedure.

As an example, the above channel access procedure is Type 1 LBT. During Type 1 LBT of the terminal device, change may occur to the SL data to-be-transmitted. In some scenarios, part or all of the SL data to-be-transmitted becomes invalid, and in other scenarios, new SL data to-be-transmitted arrives. In this case, a CAPC associated with the changed SL data to-be-transmitted may not match the CAPC associated with Type 1 LBT, and as a result, the changed SL data to-be-transmitted cannot be transmitted on an SL resource listened during Type 1 LBT.

As an example, the above channel access procedure is Type 2 LBT. A CAPC associated with the shared COT shared by another terminal with the terminal device may not match the CAPC associated with the SL data to-be-transmitted, and as a result, the changed SL data to-be-transmitted cannot be transmitted on an SL resource listened during Type 2 LBT.

Therefore, embodiments of the disclosure provide a wireless communication method. A terminal device can determine a transmission mode for SL data to-be-transmitted on a shared spectrum based on a first CAPC and a second CAPC, which helps to improve the probability of transmission of the SL data to-be-transmitted on the shared spectrum. For ease of understanding, the following introduces a wireless communication method according to embodiments of the disclosure with reference to FIG. 14.

FIG. 14 is a schematic flowchart of a wireless communication method according to embodiments of the disclosure. The method illustrated in FIG. 14 includes step S1410.

Step S1410, a terminal device determines a transmission mode for SL data to-be-transmitted on a shared spectrum based on a first CAPC and a second CAPC.

The first channel access procedure described above is a channel access procedure in which the shared spectrum is listened before transmitting the SL data on the shared spectrum, for example, the first channel access procedure can be Type 1 LBT or Type 2 LBT.

The first CAPC described above is associated with the first channel access procedure performed on the shared spectrum. If the first channel access procedure includes Type 1 LBT, then the first CAPC can be a CAPC indicated to a physical layer of the terminal device by a MAC layer of the terminal device. If the first channel access procedure includes Type 2 LBT, then first CAPC can be a CAPC indicated by shared COT information transmitted by another terminal.

The second CAPC described above can be associated with the SL data to-be-transmitted. In some implementations, the second CAPC can be determined based on a CAPC of a radio bearer for transmitting the SL data to-be-transmitted, for example, the second CAPC can be equal to the CAPC of the radio bearer for transmitting the SL data to-be-transmitted. In other implementations, the second CAPC can be determined based on a CAPC of a MAC CE for transmitting the SL data to-be-transmitted, for example, the second CAPC can be equal to the CAPC of the MAC CE for transmitting the SL data to-be-transmitted. Alternatively, in embodiments of the disclosure, the second CAPC can be determined based on the CAPC of the radio bearer for transmitting the SL data to-be-transmitted and the CAPC of the MAC CE for transmitting the SL data to-be-transmitted, and embodiments of the disclosure are not limited in this regard.

The manner for determining the second CAPC will be introduced below. In some implementations, the second CAPC is determined based on one or more of: a CAPC associated with a logical channel(s) corresponding to the SL data to-be-transmitted, a CAPC associated with a MAC CE(s) corresponding to the SL data to-be-transmitted, or the type of the SL data to-be-transmitted.

As an example, the second CAPC is determined based on the CAPC associated with the logical channel corresponding to the SL data to-be-transmitted, and then the second CAPC is determined based on a CAPC of a logical channel having the highest priority corresponding to the SL data to-be-transmitted. For example, the second CAPC is equal to the CAPC of the logical channel having the highest priority corresponding to the SL data to-be-transmitted.

As an example, the second CAPC is determined based on the CAPC associated with the MAC CE corresponding to the SL data to-be-transmitted, and then the second CAPC is determined based on a CAPC of a MAC CE having the highest priority corresponding to the SL data to-be-transmitted. For example, the second CAPC is equal to the CAPC of the MAC CE having the highest priority corresponding to the SL data to-be-transmitted.

As an example, the second CAPC is determined based on the type of the SL data to-be-transmitted. The type of SL data can include the type of a radio bearer for transmitting the SL data and/or the type of a MAC CE for transmitting the SL data.

In some implementations, the type of the MAC CE can include an SL MAC CE and/or another MAC CE(s) except the SL MAC CE.

For example, if the SL data to-be-transmitted corresponds only to the MAC CE, the second CAPC is equal to the CAPC associated with the MAC CE having the highest priority corresponding to the SL data to-be-transmitted, in other words, the value of the second CAPC is equal to the value of the CAPC associated with the MAC CE having the highest priority corresponding to the SL data to-be-transmitted.

For another example, if the type of the MAC CE corresponding to the SL data to-be-transmitted includes only an SL MAC CE, the second CAPC is the highest-priority CAPC, in other words, the value of the second CAPC is the minimum value.

In some implementations, the type of the radio bearer can include a DRB and/or an SRB.

For example, if the radio bearer corresponding to the SL data to-be-transmitted includes an SRB, the second CAPC is the highest-priority CAPC, in other words, the value of the second CAPC is the minimum value.

It should be noted that, "the radio bearer corresponding to the SL data to-be-transmitted includes an SRB" can mean that the radio bearer corresponding to the SL data to-be-transmitted includes an SRB and a DRB, or the radio bearer corresponding to the SL data to-be-transmitted includes only an SRB.

For another example, if the radio bearer corresponding to the SL data to-be-transmitted includes only a DRB(s), the second CAPC can be determined based on the CAPC of a DRB corresponding to the SL data to-be-transmitted. For example, the second CAPC can be equal to the lowest-priority CAPC of the DRB(s) corresponding to the SL data to-be-transmitted, in other words, the second CAPC can be equal to the maximum value among CAPC values of the DRBs corresponding to the SL data to-be-transmitted.

For another example, if the radio bearer corresponding to the SL data to-be-transmitted includes only a DRB(s), the second CAPC is the lowest-priority CAPC, in other words, the value of the second CAPC is the maximum value.

It should be noted that, in embodiments of the disclosure, the foregoing SL data to-be-transmitted can be understood as data currently buffered in a cache of the terminal device.

For another example, regarding the MAC CE and the logical channel corresponding to the SL data to-be-transmitted, if the logical channel includes only a DRB(s), the second CAPC is the lowest-priority CAPC among CAPCs of the DRBs, in other words, the value of the second CAPC is the maximum CAPC value of the DRBs.

For another example, regarding the MAC CE and the logical channel corresponding to the SL data to-be-transmitted, if the logical channel includes an SRB(s) or a DRB(s), the second CAPC is the highest-priority CAPC, in other words, the value of the second CAPC is the minimum value.

The method for determining the second CAPC is introduced above, and the following will introduce the transmission mode for the SL data to-be-transmitted in different scenarios in embodiments of the disclosure.

In some implementations, if a first condition is satisfied, the terminal device determines the transmission mode for the SL data to-be-transmitted on the shared spectrum.

The first condition can depend on the size relationship between the first CAPC and the second CAPC. For example, the first condition can include: the value of the first CAPC is less than or equal to the value of the second CAPC, in other words, the first CAPC is higher than the second CAPC.

The first condition can depend on a destination associated with a COT, where the COT is a COT shared with the terminal device by another terminal. For example, the first condition can include: a destination of the SL data to-be-transmitted satisfies a destination requirement associated with the shared COT.

Alternatively, in embodiments of the disclosure, the first condition can include: the destination of the SL data to-be-transmitted satisfies the destination requirement associated with the shared COT, and the value of the first CAPC is less than or equal to the value of the second CAPC. Alternatively, the two conditions can be applied independently.

In some implementations, if the first condition is satisfied, the transmission mode includes transmitting the SL data to-be-transmitted on the shared spectrum.

In embodiments of the disclosure, if the first channel access type is Type 1 LBT, then packet assembly can be performed according to the LCP procedure described above, and the assembled SL data can be transmitted on the shared spectrum. If the first channel access type is Type 2 LBT, matched SL data can be selected according to the destination associated with the shared COT to perform packet assembly, and the assembled SL data can be transmitted on the shared spectrum.

With regard to the matched SL data selected according to the destination associated with the shared COT, the matched SL data can include one or more of: SL data of which the destination is a Tx terminal device of the shared COT, SL data of which a corresponding logical channel includes a logical channel having the highest priority; SL data of which a corresponding MAC CE includes a MAC CE having the highest priority; or SL data of which the destination belongs to a destination allowed by the shared COT.

The destination allowed by the shared COT can include another terminal except the Tx terminal of the shared COT.

Transmitting the SL data to-be-transmitted on the shared spectrum can include, for example, transmitting the SL data to-be-transmitted on an SL resource which is successfully listened through the first channel access procedure in the shared spectrum.

In other implementations, if the first condition is not satisfied, the terminal device determines the transmission mode for the SL data to-be-transmitted on the shared spectrum.

For example, "the first condition is not satisfied" can include: the value of the first CAPC is greater than the value of the second CAPC, and/or a destination of part or all of data in the SL data to-be-transmitted satisfies the destination requirement associated with the shared COT.

In some implementations, the transmission mode includes transmitting part of data in the SL data to-be-transmitted on the shared spectrum, where a CAPC associated with part of data is higher than or equal to the first CAPC, and/or a destination associated with part of data satisfies the destination requirement associated with the COT.

As an example, the CAPC associated with part of data is higher than or equal to the first CAPC, which can mean that if the value of the first CAPC is greater than the value of the second CAPC, part of data of which the associated CAPC is higher than or equal to the first CAPC in the SL data to-be-transmitted can be transmitted on the shared spectrum, in other words, the terminal device can exclude, from the SL data to-be-transmitted, part of data of which the associated CAPC is lower than the first CAPC, and transmit the remaining part of the SL data on the shared spectrum.

As an example, the destination associated with part of data satisfies the destination requirement associated with the COT, which can be mean that if the destination associated with part of data in the SL data to-be-transmitted does not satisfy the destination requirement associated with the COT, part of data satisfying the destination requirement associated with the COT can be transmitted on the shared spectrum.

In other implementations, if the first condition is not satisfied, the terminal device does not transmit the SL data to-be-transmitted on an SL resource associated with the first channel access procedure, in other words, the terminal device drops the SL resource associated with the first channel access procedure.

It should be noted that, there is no limitation on the subsequent behaviour of the terminal device in embodiments of the disclosure. For example, if the terminal device does not transmit the SL data to-be-transmitted on the SL resource associated with the first channel access procedure, the terminal device can transmit the SL data to-be-transmitted on an existing subsequent resource. For another example, if the terminal device does not transmit the SL data to-be-transmitted on the SL resource associated with the first channel access procedure, the terminal device can trigger resource reselection. For another example, if the terminal device does not transmit the SL data to-be-transmitted on the SL resource associated with the first channel access procedure, the terminal device can request an SL resource from a network device, for example, request the SL resource by sending one or more of a BSR, a scheduling request (SR), or a physical uplink control channel (PUCCH).

In other implementations, if the first condition is not satisfied, the terminal device can stop resource sensing in the first channel access procedure, in other words, terminate the first channel access procedure.

It should be noted that, there is no limitation on the subsequent behaviour of the terminal device in embodiments of the disclosure. For example, if the terminal device terminates the first channel access procedure, the terminal device can perform resource sensing on the shared spectrum based on the second CAPC. That is, after terminating the first channel access procedure, the terminal device can listen to an SL resource according to a CAPC associated with current SL data to-be-transmitted.

In addition, the SL resource listened by the terminal device based on the second CAPC can include one or more of: an SL resource that has been listened previously, a next SL resource, or a newly obtained SL resource, which is not limited in embodiments of the disclosure.

In some implementations, if the first channel access procedure is successful, the terminal device can transmit a packet including the SL data to-be-transmitted on a usable SL resource.

In other implementations, if the first channel access procedure fails, the terminal device can drop the current SL resource.

There is no limitation on the subsequent behaviour of the terminal device in embodiments of the disclosure. For example, if the terminal device does not transmit the SL data to-be-transmitted on the SL resource associated with the first channel access procedure, the terminal device can transmit the SL data to-be-transmitted on an existing subsequent resource. For another example, if the terminal device does not transmit the SL data to-be-transmitted on the SL resource associated with the first channel access procedure, the terminal device can trigger resource reselection. For another example, if the terminal device does not transmit the SL data to-be-transmitted on the SL resource associated with the first channel access procedure, the terminal device can request an SL resource from a network device, for example, request the SL resource by sending one or more of a BSR, an SR, or a PUCCH.

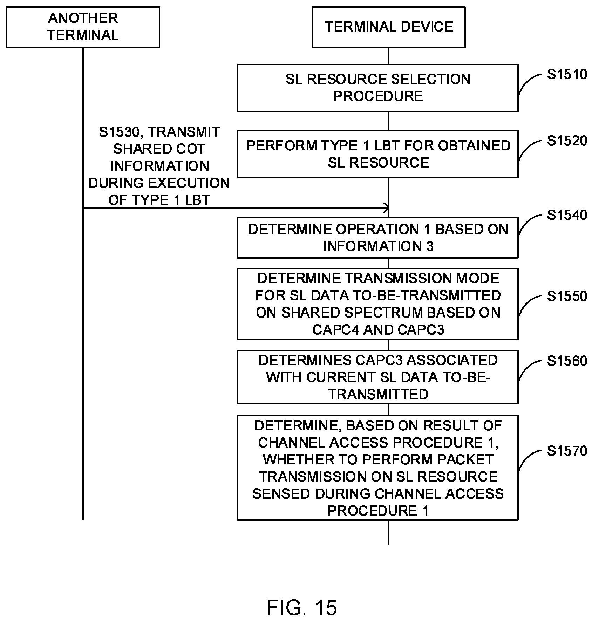

In embodiments of the disclosure, the method illustrated in FIG. 14 can be applied separately from the methods illustrated in FIG. 12 to FIG. 13. Alternatively, the method illustrated in FIG. 14 can be used in combination with the methods illustrated in FIG. 12 to FIG. 13. For ease of understanding, the following introduces a wireless communication method according to another embodiment of the disclosure with reference to FIG. 15. It should be noted that step S1510~step S1540 in FIG. 15 is the same as step S1310~step S1340. For details thereof, reference can be made to the foregoing elaborations. Step S1550 to step S1570 will be described below.

Step S1510, an SL resource selection procedure is performed.

Step S1520, a terminal device performs Type 1 LBT for an obtained SL resource.

In some implementations, a CAPC associated with Type 1 LBT is CAPC1.

Step S1530, during execution of Type 1 LBT, another terminal transmits shared COT information to the terminal device to share a COT with the terminal device.

In some implementations, the shared COT information indicates that a CAPC associated with the shared COT is CAPC2.

Step S1540, the terminal device determines operation 1 based on information 3.

Step S1550, the terminal device determines that a CAPC associated with current SL data to-be-transmitted is CAPC3.

It should be noted that, for the manner for determining CAPC3, reference can be made to the foregoing manner for determining the second CAPC, and CAPC3 can be taken as an example of the second CAPC, which is not elaborated herein for the sake of brevity.

Step S1560, the terminal device determines a transmission mode for SL data to-be-transmitted on a shared spectrum based on CAPC4 and CAPC3.

In some implementations, if it is determined in step S1540 to continue to perform Type 1 LBT, then CAPC4 is CAPC1. In this case, the terminal device determines the transmission mode for the SL data to-be-transmitted on the shared spectrum based on CAPC1 and CAPC3.

If CAPC1 is equal to CAPC3, the terminal device can perform packet assembly according to a conventional LCP procedure.

If CAPC1 is lower than CAPC3, the terminal device can perform packet assembly according to a conventional LCP procedure.

If CAPC1 is higher than CAPC3, the terminal device can perform an enhanced LCP procedure.

For example, the terminal device can exclude, from the SL data to-be-transmitted, SL data of which the value of the associated CAPC is greater than the value of CAPC1, that is, select only a logical channel or a MAC CE of which the CAPC value is less than or equal to the value of CAPC1 when performing logical channel selection, and perform packet assembly on SL data in the selected logical channel or MAC CE.

In other implementations, if it is determined in step S1540 to continue to perform Type 2 LBT, then CAPC4 is CAPC2. In this case, the terminal device determines the transmission mode for the SL data to-be-transmitted on the shared spectrum based on CAPC2 and CAPC3.

If CAPC2 is equal to CAPC3, the terminal device can select, based on a destination indicated by the shared COT, SL data satisfying a destination condition from the SL data to-be-transmitted, and perform packet assembly on the selected SL data. It should be noted that, for the foregoing SL data satisfying the destination condition, reference can be made to the foregoing illustration, which is not described herein for the sake of brevity.

If CAPC2 is lower than CAPC3, the terminal device can select, based on the destination indicated by the shared COT, SL data satisfying the destination condition from the SL data to-be-transmitted, and perform packet assembly on the selected SL data. It should be noted that, for the foregoing SL data satisfying the destination condition, reference can be made to the foregoing illustration, which is not described herein for the sake of brevity.

If CAPC2 is higher than CAPC3, the terminal device can perform an enhanced LCP procedure.

For example, the terminal device can select, based on the destination indicated by the shared COT, the SL data satisfying the destination condition from the SL data to-be-transmitted, and then exclude, from the SL data satisfying the destination condition, SL data of which the value of the associated CAPC is greater than the value of CAPC2, that is, select only a logical channel or MAC CE of which the CAPC value is less than or equal to the value of CAPC2 when performing logical channel selection, and perform packet assembly on SL data in the selected logical channel or MAC CE.

Step S1570, the terminal device determines, based on a result of channel access procedure 1, whether to perform packet transmission on an SL resource listened during channel access procedure 1.

The foregoing channel access procedure 1 can be determined in step S1540. For example, if operation 1 includes continuing to perform Type 1 LBT, then channel access procedure 1 is Type 1 LBT. For another example, if operation 1 includes continuing to perform Type 2 LBT, then channel access procedure 1 is Type 2 LBT.

If channel access procedure 1 is successful, the terminal device can transmit a packet including the SL data to-be-transmitted on a usable SL resource.

In other implementations, if channel access procedure 1 fails, the terminal device can drop the current SL resource.

In embodiments of the disclosure, there is no limitation on the subsequent behaviour of the terminal device after dropping the current SL resource. For example, if the terminal device does not transmit the SL data to-be-transmitted on an SL resource associated with a first channel access procedure, the terminal device can transmit the SL data to-be-transmitted on an existing subsequent resource. For another example, if the terminal device does not transmit the SL data to-be-transmitted on the SL resource associated with the first channel access procedure, the terminal device can trigger resource reselection. For another example, if the terminal device does not transmit the SL data to-be-transmitted on the SL resource associated with the first channel access procedure, the terminal device can request an SL resource from a network device, for example, request the SL resource by sending one or more of a BSR, an SR, or a PUCCH.

In addition, in embodiments of the disclosure, there is no limitation on the order between step S1570 and step S1560. For example, step S1570 can be performed before step S1560. For another example, step S1570 can be performed after step S1560. For another example, step S1570 can be performed simultaneously with step S1560.

In embodiments of the disclosure, step S1550 and step S1560 can be two independent steps. Alternatively, step S1550 and step S1560 can be combined into one step. In this case, during execution of step S1560, exclusion can be performed on the SL data to-be-transmitted based on CAPC3 determined through step S1550, which is not elaborated herein for the sake of brevity.

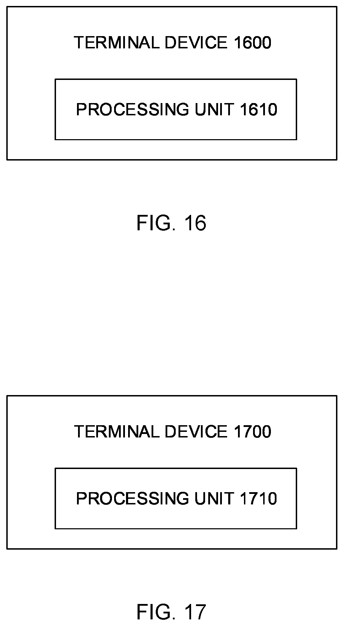

The method embodiments of the disclosure are described in detail above with reference to FIG. 1 to FIG. 15, and apparatus embodiments of the disclosure are described in detail below with reference to FIG. 16 to FIG. 17. It should be understood that, the elaboration of the method embodiments corresponds to the elaboration of the apparatus embodiments. Therefore, for part not described in detail, reference can be made to the foregoing method embodiments.

FIG. 16 is a schematic flowchart of a terminal device according to an embodiment of the disclosure. The terminal device 1600 illustrated in FIG. 16 includes a processing unit 1610. The processing unit 1610 is configured to determine to transmit first SL data on a shared spectrum based on a first channel access type and/or a second channel access type, where the first channel access type is different from the second channel access type, and the first channel access type and the second channel access type are channel access procedures in which the shared spectrum is listened before transmitting the first SL data on the shared spectrum.

In a possible implementation, a CAPC associated with the first channel access type is different from a CAPC associated with the second channel access type; and/or a type of the first channel access type is different from a type of the second channel access type.

In a possible implementation, the terminal device further includes a receiving unit. The receiving unit is configured to receive first information during channel access of the terminal device based on the first channel access type, where the first information indicates information of a shared COT to the terminal device, and the COT is associated with the second channel access type. The processing unit is configured to: in response to the first information, determine to transmit the first SL data on the shared spectrum based on the first channel access type and/or the second channel access type.

In a possible implementation, the processing unit is configured to: in response to the first information, determine, according to second information, to transmit the first SL data on the shared spectrum based on the first channel access type and/or the second channel access type, where the second information is associated with one or more of: terminal capability of the terminal device; whether the shared COT is usable; information of the first channel access type; information of SL data to-be-transmitted, where the SL data to-be-transmitted includes the first SL data; whether the terminal device expects to share an obtained COT with another terminal; or information of an SL resource selected by the terminal device.

In a possible implementation, if the second information is associated with whether the shared COT is usable, whether the shared COT is usable is determined based on one or more of: a CAPC associated with the shared COT; a transmission mode associated with the shared COT; a destination of SL communication associated with the shared COT; a remaining duration of the shared COT; a terminal device sharing the shared COT; SL resource(s) within the shared COT; information of SL data to-be-transmitted, where the SL data to-be-transmitted includes the first SL data; or a configuration from a network device.

In a possible implementation, if the second information is associated with the terminal capability of the terminal device, the terminal capability of the terminal device indicates whether the terminal device supports performing channel access in both the first channel access type and the second channel access type at the same time.

In a possible implementation, if the second information is associated with the information of the first channel access type, the information of the first channel access type includes one or more of: a CAPC associated with the first channel access type, an execution duration of the first channel access type, a backoff counter value of the first channel access type, the number of successes of the first channel access type, the number of failures of the first channel access type, a transmission mode associated with the first channel access type, or whether SL resources associated with the first channel access type are consecutive.

In a possible implementation, if the second information is associated with the information of the SL data to-be-transmitted, the information of the SL data to-be-transmitted includes one or more of: a data amount of the SL data to-be-transmitted, a data priority of the SL data to-be-transmitted, a remaining PDB of the SL data to-be-transmitted, or a CAPC associated with the SL data to-be-transmitted.

In a possible implementation, if the second information is associated with the information of the SL resource selected, the information of the SL resource selected includes a location of the SL resource selected and/or the number of resources in the SL resource selected.

In a possible implementation, the processing unit is configured to determine, according to third information, to transmit the first SL data on the shared spectrum based on the first channel access type and/or the second channel access type, where the third information is pre-defined or pre-configured.

In a possible implementation, a parameter associated with the first channel access type and/or the second channel access type is sent to a physical layer of the terminal device from a MAC layer of the terminal device.

In a possible implementation, the parameter associated with the first channel access type and/or the second channel access type includes one or more of: a CAPC, the number of consecutive transmissions, or COT information shared by another terminal.

In a possible implementation, a CAPC associated with a resource selection procedure of the terminal device is the same as or different from the CAPC associated with the first channel access type; and/or the CAPC associated with the resource selection procedure of the terminal device is the same as or different from the CAPC associated with the second channel access type.

In a possible implementation, the CAPC associated with the resource selection procedure, the number of consecutive transmissions, and the COT information shared by another terminal are sent to the physical layer of the terminal device from the MAC layer of the terminal device.

FIG. 17 is a schematic diagram of a terminal device according to another embodiment of the disclosure. The terminal device 1700 illustrated in FIG. 17 includes a processing unit 1710. The processing unit 1710 is configured to determine a transmission mode for SL data to-be-transmitted on a shared spectrum based on a first CAPC and a second CAPC, where the first CAPC is associated with a first channel access procedure performed on the shared spectrum, the second CAPC is associated with the SL data, and the first channel access procedure is a channel access procedure in which the shared spectrum is listened before transmitting the SL data on the shared spectrum.

In a possible implementation, the second CAPC is determined based on one or more of: a CAPC associated with a logical channel corresponding to the SL data to-be-transmitted; a CAPC associated with a MAC CE corresponding to the SL data to-be-transmitted; or a type of the SL data to-be-transmitted.

In a possible implementation, if the second CAPC is determined based on the CAPC associated with the logical channel corresponding to the SL data to-be-transmitted, the second CAPC is determined based on a CAPC of a logical channel having the highest priority corresponding to the SL data to-be-transmitted.

In a possible implementation, the second CAPC is equal to the CAPC of the logical channel having the highest priority corresponding to the SL data to-be-transmitted.

In a possible implementation, when the second CAPC is determined based on the type of the SL data to-be-transmitted, if the SL data to-be-transmitted corresponds to only an SL MAC CE, the second CAPC is the highest-priority CAPC; or if the SL data to-be-transmitted corresponds to an SRB, the second CAPC is the highest-priority CAPC; or if the SL data to-be-transmitted does not correspond to an SRB but corresponds to a DRB, the second CAPC is a value of the lowest-priority CAPC among CAPCs of the DRBs corresponding to the SL data to-be-transmitted.

In a possible implementation, the processing unit is configured to: determine the transmission mode for the SL data to-be-transmitted on the shared spectrum if a first condition is satisfied. The first condition is associated with the first CAPC and/or the second CAPC, and/or the first condition is associated with a destination of a COT, where the COT is a COT shared with the terminal device by another terminal.

In a possible implementation, the first condition includes one or more of the following: a value of the first CAPC is less than or equal to a value of the second CAPC; or a destination of the SL data to-be-transmitted satisfies a destination requirement associated with the shared COT.

In a possible implementation, the transmission mode includes transmitting the SL data to-be-transmitted on the shared spectrum.

In a possible implementation, the terminal device determines the transmission mode for the SL data to-be-transmitted on the shared spectrum based on the first CAPC and the second CAPC as follows. The terminal device determines the transmission mode for the SL data to-be-transmitted on the shared spectrum if the first condition is not satisfied.

In a possible implementation, the transmission mode includes transmitting part of data in the SL data to-be-transmitted on the shared spectrum, or not transmitting the SL data to-be-transmitted on an SL resource associated with the first channel access procedure, where a value of a CAPC associated with the part of data is greater than or equal to the value of the first CAPC, and/or a destination associated with the part of data satisfies a destination requirement associated with the COT.

In a possible implementation, the transmission mode includes not transmitting the SL data to-be-transmitted on the SL resource associated with the first channel access procedure, and the processing unit is configured to: stop resource sensing in the first channel access procedure; and/or perform resource sensing on the shared spectrum based on the second CAPC.

In a possible implementation, if channel access based on the first channel access procedure fails, the terminal device performs one or more of the following: the terminal device triggers resource reselection; the terminal device sends one or more of a BSR, an SR, or a PUCCH to a network device; or the terminal device transmits the SL data to-be-transmitted on a target SL resource, where the target SL resource is subsequent to the SL resource associated with the first channel access procedure.

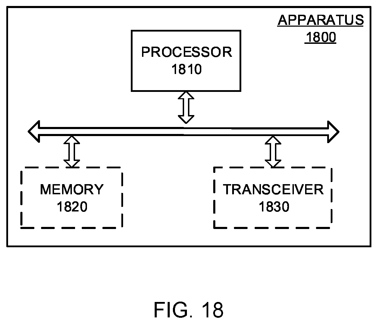

In an optional embodiment, the processing unit 1610 can be a processor 1810. The terminal device 1800 can further include a transceiver 1830 and a memory 1820, as illustrated in detail in FIG. 18.

In an optional embodiment, the processing unit 1710 can be a processor 1810. The terminal device 1800 can further include a transceiver 1830 and a memory 1820, illustrated in detail in FIG. 18.

FIG. 18 is a schematic structural diagram of a communication apparatus according to embodiments of the disclosure. A dashed line in FIG. 18 indicates that the unit or module is optional. The apparatus 1800 can be a chip, a terminal device, or a network device.

The apparatus 1800 can include one or more processors 1810. The processors 1810 can support the apparatus 1800 to implement methods described in the foregoing method embodiments. The processor 1810 can be a general-purpose processor or a dedicated processor. For example, the processor can be a central processing unit (CPU). Alternatively, the processor can also be other general-purpose processors, a digital signal processor (DSP), an application specific integrated circuit (ASIC), a field programmable gate array (FPGA), or other programmable logic devices, discrete gates or transistor logic devices, discrete hardware components. The general-purpose processor can be a microprocessor, or the processor can be any conventional processor.

The apparatus 1800 can further include one or more memories 1820. The memory 1820 is configured to store programs. The programs can be executed by the processor 1810, to cause the processor 1810 to perform the method described in the foregoing method embodiments. The memory 1820 can be separate from or integrated into the processor 1810.

The apparatus 1800 can further include a transceiver 1830. The processor 1810 can communicate with other devices or chips via the transceiver 1830. For example, the processor 1810 can perform data transmission and reception with other devices or chips via the transceiver 1830.

Embodiments of the disclosure further provide a computer-readable storage medium. The computer-readable storage medium is configured to store programs. The computer-readable storage medium can be applied to a terminal or a network device provided in embodiments of the disclosure, and the programs are operable with a computer to implement methods performed by the terminal or the network device in various embodiments of the disclosure.

Embodiments of the disclosure further provide a computer program product. The computer program product includes programs. The computer program product can be applied to a terminal or a network device provided in embodiments of the disclosure, and the programs are operable with a computer to implement methods performed by the terminal or the network device in various embodiments of the disclosure.

Embodiments of the disclosure further provide a computer program. The computer program can be applied to a terminal or a network device provided in embodiments of the disclosure, and the computer program is operable with a computer to implement methods performed by the terminal or the network device in various embodiments of the disclosure.

It should be noted that, the CAPC can be understood as a CAPC priority, and the value of the CAPC (also referred to as "CAPC value") can be understood as a CAPC priority level. In general, a lower CAPC value corresponds to a higher-priority CAPC, and on the contrary, a higher CAPC value corresponds to a lower-priority CAPC. In embodiments of the disclosure, a lower CAPC value corresponds to a lower-priority CAPC, and on the contrary, a higher CAPC value corresponds to a higher-priority CAPC. Embodiments of the disclosure are not limited in this regard. For ease of understanding, in the following elaborations, a lower CAPC value corresponds to a higher-priority CAPC, and on the contrary, a higher CAPC value corresponds to a lower-priority CAPC.

It should also be understood that, the terms "system" and "network" herein can be used interchangeably throughout the disclosure. In addition, the terms used in the disclosure are only used to explain embodiments of the disclosure, and are not intended to limit the disclosure. The terms "first", "second", "third", and "fourth", etc. in the specification and claims of the disclosure and in the drawings are used for distinguishing different objects rather than describing a particular order. Furthermore, the terms "including", "comprising", "having", and any variations thereof are intended to cover a non-exclusive inclusion.

In embodiments of the disclosure, "indication" referred to in embodiments of the disclosure can be a direct indication, can be an indirect indication, or can mean that there is an association. For example, A indicates *B* may can that A directly indicates B, for instance, B can be obtained according to A; can mean that A indirectly indicates B, for instance, A indicates *C*, and *B* can be obtained according to *C*; or can mean that that there is an association between *A* and *B*.

In embodiments of the disclosure, "*B* corresponding to *A*" indicates that *B* is associated with *A*, and *B* can be determined according to *A*. However, it should be further understood that, "determine *B* according to *A*" does not mean that *B* is determined according to *A* only, and *B* can also be determined according to *A* and/or other information.

In embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configured" can be implemented by pre-storing a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" can refer to a communication standard protocol, which can include, for example, an LTE protocol, an NR protocol, and a protocol applied to a future communication system, and the disclosure is not limited in this regard.

The term "and/or" in embodiments of the disclosure only describes an association between associated objects, which means that there can be three relationships. For example, A and/or B can mean A alone, both A and B exist, and B alone. In addition, the character "/" herein generally indicates that the associated objects are in an "or" relationship.

In various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be appreciated that the systems, apparatuses, and methods disclosed in embodiments of the disclosure can also be implemented in various other manners. For example, the above apparatus embodiments are merely illustrative, e.g., the division of units is only a division of logical functions, and other manners of division can be usable in practice, e.g., multiple units or assemblies can be combined or can be integrated into another system, or some features can be ignored or skipped. In other respects, the coupling or direct coupling or communication connection as illustrated or discussed can be an indirect coupling or communication connection through some interface, device, or unit, and can be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
determining, by a terminal device, to transmit first sidelink (SL) data on a shared spectrum based on a first channel access type and/or a second channel access type, wherein the first channel access type is different from the second channel access type, and the first channel access type and the second channel access type are channel access procedures in which the shared spectrum is listened before transmitting the first SL data on the shared spectrum.

2. The method of claim 1, wherein
a channel access priority class (CAPC) associated with the first channel access type is different from a CAPC associated with the second channel access type; and/or
a type of the first channel access type is different from a type of the second channel access type.

3. The method of claim 1 or 2, wherein
the method further comprises:
receiving, by the terminal device, first information during channel access of the terminal device based on the first channel access type, wherein the first information indicates information of a shared channel occupancy time (COT) to the terminal device, and the COT is associated with the second channel access type; and
determining, by the terminal device, to transmit the first SL data on the shared spectrum based on the first channel access type and/or the second channel access type comprises:
in response to the first information, determining, by the terminal device, to transmit the first SL data on the shared spectrum based on the first channel access type and/or the second channel access type.

4. The method of claim 3, wherein in response to the first information, determining, by the terminal device, to transmit the first SL data on the shared spectrum based on the first channel access type and/or the second channel access type comprises:
in response to the first information, determining, by the terminal device according to the second information, to transmit the first SL data on the shared spectrum based on the first channel access type and/or the second channel access type, wherein the second information is associated with one or more of:
terminal capability of the terminal device;
whether the shared COT is usable;
information of the first channel access type;
information of SL data to-be-transmitted, wherein the SL data to-be-transmitted comprises the first SL data;
whether the terminal device expects to share an obtained COT with another terminal; or
information of an SL resource selected by the terminal device.

5. The method of claim 4, wherein when the second information is associated with whether the shared COT is usable, whether the shared COT is usable is determined based on one or more of:
a CAPC associated with the shared COT;
a transmission mode associated with the shared COT;
a destination of SL communication associated with the shared COT;
a remaining duration of the shared COT;
a terminal device sharing the shared COT;
SL resource within the shared COT;
information of SL data to-be-transmitted, wherein the SL data to-be-transmitted comprises the first SL data; or
a configuration from a network device.

6. The method of claim 4, wherein when the second information is associated with the terminal capability of the terminal device, the terminal capability of the terminal device indicates whether the terminal device supports performing channel access in both the first channel access type and the second channel access type at the same time.

7. The method of claim 4, wherein when the second information is associated with the information of the first channel access type, the information of the first channel access type comprises one or more of:
a CAPC associated with the first channel access type, an execution duration of the first channel access type, a backoff counter value of the first channel access type, the number of successes of the first channel access type, the number of failures of the first channel access type, a transmission mode associated with the first channel access type, or whether SL resources associated with the first channel access type are consecutive.

8. The method of claim 4, wherein when the second information is associated with the information of the SL data to-be-transmitted, the information of the SL data to-be-transmitted comprises one or more of:
a data amount of the SL data to-be-transmitted, a data priority of the SL data to-be-transmitted, a remaining packet delay budget (PDB) of the SL data to-be-transmitted, or a CAPC associated with the SL data to-be-transmitted.

9. The method of claim 4, wherein when the second information is associated with the information of the SL resource selected, the information of the SL resource selected comprises a location of the SL resource selected and/or the number of resources in the SL resource selected.

10. The method of claim 1 or 2, wherein determining, by the terminal device, to transmit the first SL data on the shared spectrum based on the first channel access type and/or the second channel access type comprises:
determining, by the terminal device according to third information, to transmit the first SL data on the shared spectrum based on the first channel access type and/or the second channel access type, wherein the third information is pre-defined or pre-configured.

11. The method of any of claims 1 to 10, wherein a parameter associated with the first channel access type and/or the second channel access type is sent to a physical layer of the terminal device from a media access control (MAC) layer of the terminal device.

12. The method of claim 11, wherein the parameter associated with the first channel access type and/or the second channel access type comprises one or more of: a CAPC, the number of consecutive transmissions, or COT information shared by another terminal.

13. The method of any of claims 1 to 12, wherein
a CAPC associated with a resource selection procedure of the terminal device is the same as or different from the CAPC associated with the first channel access type; and/or
the CAPC associated with the resource selection procedure of the terminal device is the same as or different from the CAPC associated with the second channel access type.

14. The method of claim 13, wherein the CAPC associated with the resource selection procedure, the number of consecutive transmissions, and the COT information shared by another terminal are sent to the physical layer of the terminal device from the MAC layer of the terminal device.

15. A wireless communication method, comprising:
determining, by a terminal device, a transmission mode for sidelink (SL) data to-be-transmitted on a shared spectrum based on a first channel access priority class (CAPC) and a second CAPC, wherein
the first CAPC is associated with a first channel access procedure performed on the shared spectrum, the second CAPC is associated with the SL data, and the first channel access procedure is a channel access procedure in which the shared spectrum is listened before transmitting the SL data on the shared spectrum.

16. The method of claim 15, wherein the second CAPC is determined based on one or more of:
a CAPC associated with a logical channel corresponding to the SL data to-be-transmitted;
a CAPC associated with a MAC CE corresponding to the SL data to-be-transmitted; or
a type of the SL data to-be-transmitted.

17. The method of claim 16, wherein when the second CAPC is determined based on the CAPC associated with the logical channel corresponding to the SL data to-be-transmitted, the second CAPC is determined based on a CAPC of a logical channel having the highest priority corresponding to the SL data to-be-transmitted.

18. The method of claim 17, wherein the second CAPC is equal to the CAPC of the logical channel having the highest priority corresponding to the SL data to-be-transmitted.

19. The method of any of claims 16 to 18, wherein when the second CAPC is determined based on the type of the SL data to-be-transmitted,
in response to the SL data to-be-transmitted corresponding to only an SL MAC CE, the second CAPC is the highest-priority CAPC; or
in response to the SL data to-be-transmitted corresponding to a signaling radio bearer (SRB), the second CAPC is the highest-priority CAPC; or
in response to the SL data to-be-transmitted not corresponding to an SRB but corresponding to a data radio bearer (DRB), the second CAPC is a value of the lowest-priority CAPC among CAPCs of the DRBs corresponding to the SL data to-be-transmitted.

20. The method of any of claims 15 to 19, wherein determining, by the terminal device, the transmission mode for the SL data to-be-transmitted on the shared spectrum based on the first CAPC and the second CAPC comprises:
determining, by the terminal device, the transmission mode for the SL data to-be-transmitted on the shared spectrum when a first condition is satisfied, wherein the first condition is associated with the first CAPC and/or the second CAPC, and/or the first condition is associated with a destination of a COT, wherein the COT is a COT shared with the terminal device by another terminal.

21. The method of claim 20, wherein the first condition comprises one or more of:
a value of the first CAPC is less than or equal to a value of the second CAPC; or
a destination of the SL data to-be-transmitted satisfies a destination requirement associated with the shared COT.

22. The method of any of claims 20 to 21, wherein the transmission mode comprises transmitting the SL data to-be-transmitted on the shared spectrum.

23. The method of any of claims 20 to 22, wherein determining, by the terminal device, the transmission mode for the SL data to-be-transmitted on the shared spectrum based on the first CAPC and the second CAPC comprises:
determining, by the terminal device, the transmission mode for the SL data to-be-transmitted on the shared spectrum when the first condition is not satisfied.

24. The method of claim 23, wherein the transmission mode comprises transmitting part of data in the SL data to-be-transmitted on the shared spectrum, or not transmitting the SL data to-be-transmitted on an SL resource associated with the first channel access procedure, wherein
a value of a CAPC associated with the part of data is less than or equal to the value of the first CAPC, and/or a destination associated with the part of data satisfies a destination requirement associated with the COT.

25. The method of claim 24, wherein when the transmission mode comprises not transmitting the SL data to-be-transmitted on the SL resource associated with the first channel access procedure, the method further comprises:
stopping, by the terminal device, resource sensing in the first channel access procedure; and/or
performing, by the terminal device, resource sensing on the shared spectrum based on the second CAPC.

26. The method of any of claims 15 to 25, wherein when channel access based on the first channel access procedure fails, the terminal device performs one or more of:
triggering, by the terminal device, resource reselection;
sending, by the terminal device, one or more of a buffer status report (BSR), a scheduling request (SR), or a physical uplink control channel (PUCCH) to a network device; or
transmitting, by the terminal device, the SL data to-be-transmitted on a target SL resource, wherein the target SL resource is subsequent to the SL resource associated with the first channel access procedure.

27. A terminal device, comprising:
a processing unit configured to determine to transmit first sidelink (SL) data on a shared spectrum based on a first channel access type and/or a second channel access type, wherein the first channel access type is different from the second channel access type, and the first channel access type and the second channel access type are channel access procedures in which the shared spectrum is listened before transmitting the first SL data on the shared spectrum.

28. The terminal device of claim 27, wherein
a channel access priority class (CAPC) associated with the first channel access type is different from a CAPC associated with the second channel access type; and/or
a type of the first channel access type is different from a type of the second channel access type.

29. The terminal device of claim 27 or 28, wherein
the terminal device further comprises:
a receiving unit configured for the terminal device to receive first information during channel access of the terminal device based on the first channel access type, wherein the first information indicates information of a shared channel occupancy time (COT) to the terminal device, and the COT is associated with the second channel access type; and
the processing unit is configured to
in response to the first information, determine, by the terminal device, to transmit the first SL data on the shared spectrum based on the first channel access type and/or the second channel access type.

30. The terminal device of claim 29, wherein the processing unit is configured to:
in response to the first information, determine, according to second information, to transmit the first SL data on the shared spectrum based on the first channel access type and/or the second channel access type, wherein the second information is associated with one or more of:
terminal capability of the terminal device;
whether the shared COT is usable;
information of the first channel access type;
information of SL data to-be-transmitted, wherein the SL data to-be-transmitted comprises the first SL data;
whether the terminal device expects to share an obtained COT with another terminal; or
information of an SL resource selected by the terminal device.

31. The terminal device of claim 30, wherein when the second information is associated with whether the shared COT is usable, whether the shared COT is usable is determined based on one or more of:
a CAPC associated with the shared COT;
a transmission mode associated with the shared COT;
a destination of SL communication associated with the shared COT;
a remaining duration of the shared COT;
a terminal device sharing the shared COT;
SL resource within the shared COT;
information of SL data to-be-transmitted, wherein the SL data to-be-transmitted comprises the first SL data; or
a configuration from a network device.

32. The terminal device of claim 30, wherein when the second information is associated with the terminal capability of the terminal device, the terminal capability of the terminal device indicates whether the terminal device supports performing channel access in both the first channel access type and the second channel access type at the same time.

33. The terminal device of claim 30, wherein when the second information is associated with the information of the first channel access type, the information of the first channel access type comprises one or more of:
a CAPC associated with the first channel access type, an execution duration of the first channel access type, a backoff counter value of the first channel access type, the number of successes of the first channel access type, the number of failures of the first channel access type, a transmission mode associated with the first channel access type, or whether SL resources associated with the first channel access type are consecutive.

34. The terminal device of claim 30, wherein when the second information is associated with the information of the SL data to-be-transmitted, the information of the SL data to-be-transmitted comprises one or more of:
a data amount of the SL data to-be-transmitted, a data priority of the SL data to-be-transmitted, a remaining packet delay budget (PDB) of the SL data to-be-transmitted, or a CAPC associated with the SL data to-be-transmitted.

35. The terminal device of claim 30, wherein when the second information is associated with the information of the SL resource selected, the information of the SL resource selected comprises a location of the SL resource selected and/or the number of resources in the SL resource selected.

36. The terminal device of claim 27 or 28, wherein the processing unit is configured to:
determine, according to third information, to transmit the first SL data on the shared spectrum based on the first channel access type and/or the second channel access type, wherein the third information is pre-defined or pre-configured.

37. The terminal device of any of claims 27 to 36, wherein a parameter associated with the first channel access type and/or the second channel access type is sent to a physical layer of the terminal device from a media access control (MAC) layer of the terminal device.

38. The terminal device of claim 37, wherein the parameter associated with the first channel access type and/or the second channel access type comprises one or more of: a CAPC, the number of consecutive transmissions, or COT information shared by another terminal.

39. The terminal device of any of claims 27 to 38, wherein
a CAPC associated with a resource selection procedure of the terminal device is the same as or different from the CAPC associated with the first channel access type; and/or
the CAPC associated with the resource selection procedure of the terminal device is the same as or different from the CAPC associated with the second channel access type.

40. The terminal device of claim 39, wherein the CAPC associated with the resource selection procedure, the number of consecutive transmissions, and the COT information shared by another terminal are sent to the physical layer of the terminal device from the MAC layer of the terminal device.

41. A terminal device, comprising:
a processing unit configured to determine a transmission mode for sidelink (SL) data to-be-transmitted on a shared spectrum based on a first channel access priority class (CAPC) and a second CAPC, wherein
the first CAPC is associated with a first channel access procedure performed on the shared spectrum, the second CAPC is associated with the SL data, and the first channel access procedure is a channel access procedure in which the shared spectrum is listened before transmitting the SL data on the shared spectrum.

42. The terminal device of claim 41, wherein the second CAPC is determined based on one or more of:
a CAPC associated with a logical channel corresponding to the SL data to-be-transmitted;
a CAPC associated with a MAC CE corresponding to the SL data to-be-transmitted; or
a type of the SL data to-be-transmitted.

43. The terminal device of claim 42, when the second CAPC is determined based on the CAPC associated with the logical channel corresponding to the SL data to-be-transmitted, the second CAPC is determined based on a CAPC of a logical channel having the highest priority corresponding to the SL data to-be-transmitted.

44. The terminal device of claim 43, wherein the second CAPC is equal to the CAPC of the logical channel having the highest priority corresponding to the SL data to-be-transmitted.

45. The terminal device of claim 44, wherein when the second CAPC is determined based on the type of the SL data to-be-transmitted,
in response to the SL data to-be-transmitted corresponding to only an SL MAC CE, the second CAPC is the highest-priority CAPC; or
in response to the SL data to-be-transmitted corresponding to a signaling radio bearer (SRB), the second CAPC is the highest-priority CAPC; or
in response to the SL data to-be-transmitted not corresponding to an SRB but corresponding to a data radio bearer (DRB), the second CAPC is a value of the lowest-priority CAPC among CAPCs of the DRBs corresponding to the SL data to-be-transmitted.

46. The terminal device of any of claims 41 to 45, wherein the processing unit is configured to:
determine the transmission mode for the SL data to-be-transmitted on the shared spectrum when a first condition is satisfied, wherein the first condition is associated with the first CAPC and/or the second CAPC, and/or the first condition is associated with a destination of a COT, wherein the COT is a COT shared with the terminal device by another terminal.

47. The terminal device of claim 46, wherein the first condition comprises one or more of:
a value of the first CAPC is less than or equal to a value of the second CAPC; or
a destination of the SL data to-be-transmitted satisfies a destination requirement associated with the shared COT.

48. The terminal device of any of claims 46 to 47, wherein the transmission mode comprises transmitting the SL data to-be-transmitted on the shared spectrum.

49. The terminal device of any of claims 46 to 48, wherein determining, by the terminal device, the transmission mode for the SL data to-be-transmitted on the shared spectrum based on the first CAPC and the second CAPC comprises:
determining, by the terminal device, the transmission mode for the SL data to-be-transmitted on the shared spectrum when the first condition is not satisfied.

50. The terminal device of claim 49, wherein the transmission mode comprises transmitting part of data in the SL data to-be-transmitted on the shared spectrum, or not transmitting the SL data to-be-transmitted on an SL resource associated with the first channel access procedure, wherein
a value of a CAPC associated with the part of data is greater than or equal to the value of the first CAPC, and/or a destination associated with the part of data satisfies a destination requirement associated with the COT.

51. The terminal device of claim 50, wherein the transmission mode comprises not transmitting the SL data to-be-transmitted on the SL resource associated with the first channel access procedure, and the processing unit is configured to:
stop resource sensing in the first channel access procedure; and/or
perform resource sensing on the shared spectrum based on the second CAPC.

52. The terminal device of any of claims 41 to 51, wherein when channel access based on the first channel access procedure fails, the terminal device performs one or more of:
triggering, by the terminal device, resource reselection;
sending, by the terminal device, one or more of a buffer status report (BSR), a scheduling request (SR), or a physical uplink control channel (PUCCH) to a network device; or
transmitting, by the terminal device, the SL data to-be-transmitted on a target SL resource, wherein the target SL resource is subsequent to the SL resource associated with the first channel access procedure.

53. A terminal device, comprising:
a transceiver;
a memory configured to store programs; and
a processor configured to invoke the programs from the memory and control the transceiver to receive or send a signal, to cause the terminal device executes the method of any of claims 1 to 26.

54. An apparatus, comprising:
a processor configured to invoke programs from a memory to cause the apparatus to perform the method of any of claims 1 to 26.

55. A chip, comprising:
a processor, configured to invoke programs from a memory, to cause a device equipped with the chip to perform the method of any of claims 1 to 26.

56. A computer-readable storage medium, configured to store programs which are operable with a computer to perform the method of any of claims 1 to 26.

57. A computer program product, comprising programs which are operable with a computer to perform the method of any of claims 1 to 26.

58. A computer program, operable with a computer to perform the method of any of claims 1 to 26.
